Europäisches Patentamt

(19) European Patent Office  (11) Veröffentlichungsnummer: **0 002 197**

Office européen des brevets **A2**

(12) **EUROPÄISCHE PATENTANMELDUNG**

(21) Anmeldenummer: **78101339.6**

(22) Anmeldetag: **09.11.78**

(51) Int. Cl.²: **F 16 L 33/00**
**F 16 L 25/00, F 16 L 11/11**
**F 16 L 11/14, F 16 L 11/16**
**F 16 L 35/00, F 16 L 37/08**
**F 16 L 37/02, F 24 F 13/02**
**F 16 L 41/08, F 24 F 13/06**

(30) Priorität: **25.11.77 DE 2752622**
**03.03.78 DE 2809123**
**28.07.78 DE 2833242**

(43) Veröffentlichungstag der Anmeldung:
**13.06.79 Patentblatt 79/12**

(84) Benannte Vertragsstaaten:
**BE CH DE FR GB LU NL SE**

(71) Anmelder: **Georg, Röhl Lichttechnische Spezialfabrik Apparate- und Gerätebau**
**Lilienthalstrasse 18 Postfach**
**D-8400 Regensburg 1(DE)**

(72) Erfinder: **Homeier, Maximilian**
**Kohlstatt 11**
**D-8411 Viehhausen(DE)**

(72) Erfinder: **Röhl-Hager, Hannelore**
**Schöneberger Strasse 18**
**D-8400 Regensburg(DE)**

(74) Vertreter: **Jung, Elisabeth et al,**
**Patentanwälte Dr. Jung, Dr. Schirdewahn Dr.**
**Schmitt-Nilson Postfach 40 14 68 Clemensstrasse 30**
**D-8000 München 40(DE)**

(54) **Verfahren zum Herstellen einer Ent- oder Belüftungsleitung, Anwendungen des Verfahrens sowie zum Ausführen des Verfahrens geeignetes Rohr.**

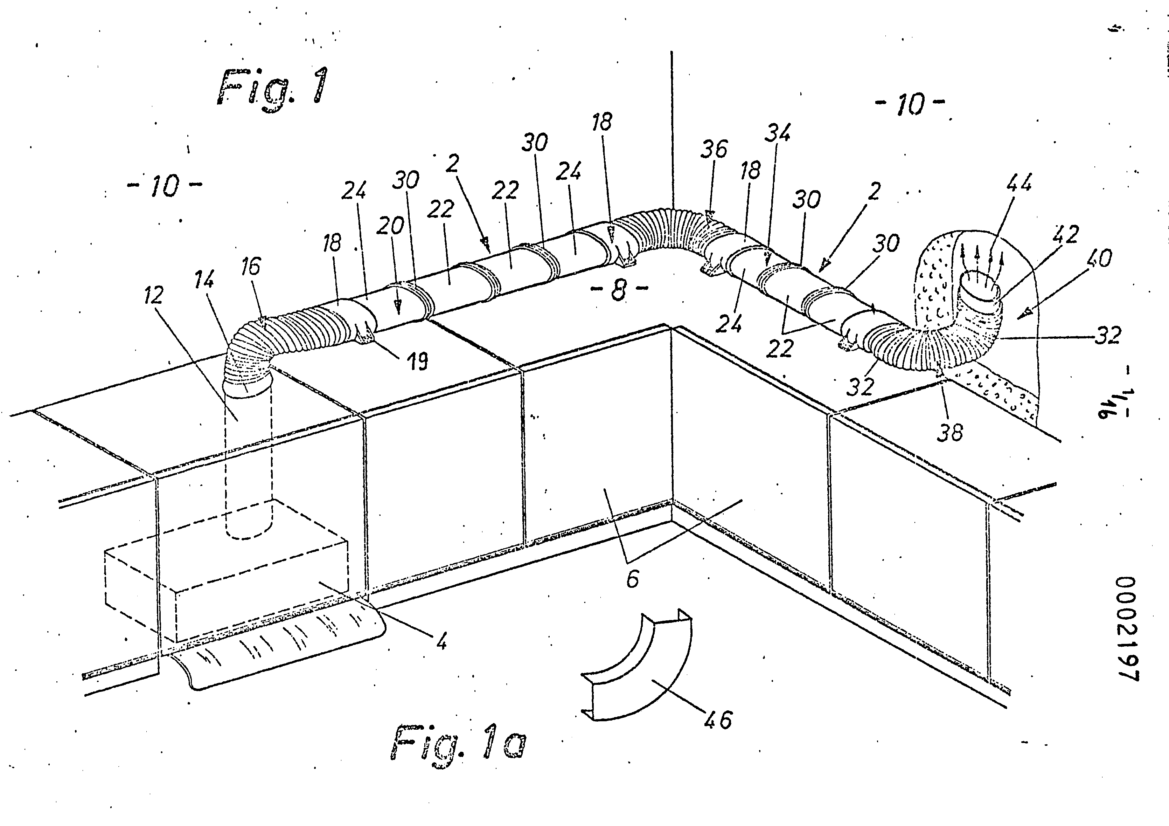

㊗ Die Erfindung betrifft ein Verfahren zum Herstellen einer Ent- oder Belüftungsleitung, Anwendungen des Verfahrens auf eine Ent- oder Belüftungsleitung eines Hausgerätes und ein Rohr aus selbsttragendem integralem Wandmaterial für derartige Leitungen (Fig. 1). Das Verfahren wird durch Verbinden von Rohrleitungsstücken (20, 16, 36, 34) unter Wechsel des lichten Querschnitts der Rohrleitung (2) im Verbindungsbereich eines Rohres (20) aus selbsttragendem integralem Wandmaterial mit einem Anschlußteil (18) durch Verformen des vorgefertigten Endes eines der mit ihren Enden zu verbindenden Rohrleitungsstücke in einen unterschiedlichen Anschlußquerschnitt durchgeführt. Hierbei wird das mit dem Anschlußteil (18) zu verbindende Ende des Rohres (20) in den Anschlußquerschnitt verformt. Das Rohr (20) hat insbesondere einen lichten Querschnitt, dessen Innenwandumfang gleich dem eines Rundrohres mit nicht weniger als ca. 80 und nicht mehr als ca. 150 mm Rohrdurchmesser ist. Mindestens ein Ende (24) des Rohres (20) ist derart dünnwandig aus einem flexiblen Material, daß die Wandung des Rohrendes aus dem vorgefertigten lichten Querschnitt in einen unterschiedlichen Anschlußquerschnitt drück- und/oder ziehbar ist.

DIPL.-CHEM. DR. ELISABETH JUNG
DIPL.-PHYS. DR. JÜRGEN SCHIRDEWAHN
DR.-ING. GERHARD SCHMITT-NILSON
PATENTANWÄLTE

8000 MÜNCHEN 40,
CLEMENSSTRASSE 30      P.O.POP 401466
TELEFON 34 50 67
TELEGRAMM-ADRESSE: INVENT/MÜNCHEN
TELEX 5-29 686

9. November 1978

L 943 M   (Dr.S/k/we)

Georg  R ö h l
Lichttechnische Spezialfabrik
Apparate- und Gerätebau
Lilienthalstraße 18

D-8400 Regensburg

---

Verfahren zum Herstellen einer Ent- oder Belüftungsleitung,
Anwendungen des Verfahrens sowie zum Ausführen des Verfahrens
geeignetes Rohr

---

Beanspruchte Prioritäten:

1. 25. November 1977, Bundesrepublik Deutschland, P 27 52 622.3

2.  3. März     1978, Bundesrepublik Deutschland, P 28 09 123.8

3. 28. Juli     1978, Bundesrepublik Deutschland, P 28 33 242.5

---

Die Erfindung bezieht sich zunächst auf ein Verfahren zum Herstellen einer Ent- oder Belüftungsleitung. Ohne die Erfindung hierauf beschränken zu wollen, ist dabei insbesondere an Einsatzfälle in Wohn- und Büroräumen, insbesondere in der Haushalttechnik, gedacht. So wird beispielsweise insbesondere die Herstellung einer Entlüftungsleitung eines Hausgerätes, z.B.

- 2 -

0002197

einer Dunstabzugshaube oder eines Wäschetrockners oder eines Raumes eines bewohnten Gebäudes, z.B. eines sanitären Raumes, oder die Herstellung einer Belüftungsleitung eines Hausgerätes, z.B. zur Wärmeabfuhr an einem Kühlschrank oder Herd, oder einer Raumklimatisierung in Betracht gezogen. In derartigen Fällen kommen im allgemeinen Ent- oder Belüftungsleitungen mit einem lichten Querschnitt in Frage, dessen Innenwandumfang gleich dem eines Rundrohres mit nicht weniger als ca. 80 und nicht mehr als ca. 150 mm Rohrdurchmesser ist. Die Erfindung befaßt sich insbesondere, aber nicht ausschließlich, mit der Problematik derartiger Ent- oder Belüftungsleitungen.

In dem speziell angesprochenen Anwendungsgebiet ist es üblich, daß mit der Be- und/oder Entlüftungsleitung zu versehende Geräte oder Anschlußteile zylindrische Anschlußstutzen haben, meist mit einem Außendurchmesser von 100 mm. Auf einen solchen Anschlußstutzen wird das anzuschließende Rohrleitungsstück meist einfach aufgeschoben, wenn man nicht einen besonderen Rohrverbinder zwischenschalten will. Nun könnte man die Ent- oder Belüftungsleitung an sich zylindrisch, z.B. nach Art einer Wasserrohrleitung, fortsetzen. Dies ist jedoch oft aus funktionellen oder ästhetischen Gründen unerwünscht. So mag einmal nicht hinreichender Raumbedarf für einen Vollzylinder vorhanden sein oder das andere Mal die Verlegung einer Vollzylinderleitung beispielsweise über Hängeschränken einer Küche die Leitung sichtbar machen und daher optisch stören. Wenn man zwar auch bisher derartige zylindrische Rohrleitungsverbindungen nach Art einer Wasserleitung für strömungsmäßig optimal gehalten hat, so ist man doch aus den genannten Gründen trotzdem mindestens über Teilbereiche der Rohrleitung auf eine abgeflachte Rohrform übergegangen und hat dabei eine gewisse Verringerung des effektiven lichten Rohrquerschnitts in Kauf genommen (DE-Gbm 7 224 234). In einem solchen Fall hat man neben mehr oder minder abgeflacht rechteckigen Rohrformen auch ovale Rohrformen in Betracht gezogen (Ausführungsbeispiel DE-Gbm 7 224 234 und DE-Gbm 7 624 5o6). Die hierfür bekannten Kunststoffrohre haben dabei eine Wandstärke von 2 bis 2,5 mm und bestehen entweder aus Polystyrol (z.B. das auf dem Markt befindliche System gemäß DE-Gbm 7 624 5o6) oder PVC (z.B. das auf dem Markt befindliche System der Anmelderin nach DE-Gbm 7 224 234). Diese abgeflachten Kunststoffrohre sind im wesentlichen glatt ausgebildet und dabei aufgrund ihrer Wandstärke und ihres Materials biege- und formsteif sowie selbsttragend. Zur Anpassung an einen anderen Anschlußquerschnitt, z.B. einen zylindrischen Anschlußstutzen, ist man bei diesem bekannten System daher auf die Verwendung von querschnittsverändernden Übergangsstücken angewiesen. Hierzu hat man entweder beispielweise aus demselben Material wie die übrigen Kunststoffrohre biege- und formsteife rohrartige Übergangsstücke oder gegebenenfalls armierte Textilbalgstücke verwendet, die also nicht aus selbsttragendem integralem Wandmaterial, insbesondere auch nicht aus homogenem Wandmaterial, bestehen, aber nicht

- 4 -

nur biegsam, sondern auch im Querschnitt formveränderbar sind.
Jedenfalls erfordert dieses bekannte System eine ganze Reihe
verschiedener Rohrleitungsstücke, z.B. je nach dem Anwendungsfall mindestens sechs bis sieben einschließlich der gesonderten querschnittsverändernden Übergangsstücke. Hierbei ist zu
berücksichtigen, daß meist sowohl am Eingang als auch am Ausgang einer sonst abgeflacht ausgebildeten Rohrleitung zylindrische Anschlüsse vorgesehen waren, beispielsweise nicht nur an
einer Dunstabzugshaube, sondern auch an einem ins Freie mündenden Mauerkasten mit Jalousie- oder Gittereinsatz. Außerdem
mußten bei Richtungsänderung Rohrkrümmer eingesetzt werden.

Schwierigkeiten der genannten Art treten zwar weniger auf,
wenn man, was auch vorbekannt ist, alternativ zu den Kunststoffrohren Schläuche zur Verlegung der Be- oder Entlüftungsleitung verwendet. Aufgrund der mangelnden Formstabilität
der Schläuche werden diesen jedoch die erwähnten Kunststoffrohre in vielen Fällen vorgezogen.

Vorbekannt sind ferner als Blasformstücke gebildete ovale
Kunststoffrohre für die Klimatisierung von Kraftfahrzeugen, bei denen ein sonst glattes Rohr mit mindestens einem balgartig ausgebildeten biegsamen Abschnitt versehen ist. Der Übergang auf einen zylindrischen Anschlußquerschnitt erfolgt dabei durch entsprechende Vorformung des glatten Rohrabschnitts nach Art eines bekannten Rohrübergangsstückes von einem auf einen anderen Querschnitt.

Der Erfindung liegt die Aufgabe zugrunde, bei Ent- oder Belüftungsleitungen Rohre aus selbsttragendem integralem Wandmaterial einsetzen zu können, die anders als Schläuche hinreichend formstabil sind, um auch konventionell zu einer formstabilen Rohrleitung, gegebenenfalls unter Verwendung von Rohrkrümmern und/oder Übergangsstücken, verlegt werden zu können, andererseits jedoch bedarfsweise die Möglichkeit eröffnen, bei dem Übergang auf einen anderen Anschlußquerschnitt gesonderte oder vorgebildete Übergangsstücke an einem nicht dem Endquerschnitt des Rohres entsprechenden Anschlußquerschnitt entbehrlich zu machen.

Für diese bedarfsweise Alternative bezieht sich die Erfindung auf ein Verfahren zum Herstellen einer Ent- oder Belüftungsleitung durch Verbinden von Rohrleitungsstücken unter Wechsel des lichten Querschnitts der Rohrleitung im Verbindungsbereich eines Rohres aus selbsttragendem integralem Wandmaterial mit einem Anschlußteil durch Verformen des vorgefertigten Endes eines der mit ihren Enden zu verbindenden Rohrleitungsstücke in einen unterschiedlichen Anschlußquerschnitt - was bisher durch Verformen eines textilen Anschlußbalges mit Drahteinlage geschah -, und sieht vor, daß das mit dem Anschlußteil zu verbindende Ende des Rohres in den Anschlußquerschnitt verformt wird. 0002197

Es ist dabei möglich, auch dem Anschlußteil einen Teil der Verformungsarbeit aufzuerlegen; vorzugsweise wird jedoch das Ende des Rohres in den vorgefertigten Anschlußquerschnitt des Anschlußteils verformt.

Das Rohr kann hierbei aus Kunststoff bestehen und so eine selbsttragende integrale Wandausbildung, ja sogar in homogener Materialverteilung, besitzen. In Frage kommen aber auch solche Rohre, die z.B. aus Bandmaterial aus Aluminium oder einer Aluminiumlegierung gewickelt sind, oder, allgemeiner, aus einem nicht brennbaren Baustoff gemäß Baustoffklasse A1 nach DIN 4102 bestehen.

Es ist möglich, das zu verformende Ende des Rohres oder das ganze Rohr selbst biegsam vorzufertigen, so daß eine biegende und nicht knickende Auslenkung um die Rohrachse möglich ist. Hierzu kommt beispielsweise eine Faltenbalgausbildung, z.B. in neuartiger Weise am Ende des Rohres, in Frage. Für andere Anwendungsfälle wird jedoch das zu verformende Ende des Rohres zweckmäßig biegesteif vorgefertigt. Unter Biegesteifigkeit wird eine Steifigkeit gegen Ausbiegung der Rohrachse verstanden, die im allgemeinen bei überhöhten Kräften eher zum Knicken als zum Biegen des Endes des Rohres führt.

In einem solchen Falle ist es denkbar, das biegesteife Ende des Rohres unter Verwendung zusätzlicher Hilfsmittel, beispielsweise unter Erwärmung, zu verformen. Vorzugsweise wird jedoch das biegesteife Ende kaltverformt. Für den Fall, daß das in den Anschlußquerschnitt verformte

0002197

Ende des einen Rohrleitungsstücks, wie im bekannten Fall eines Faltenbalgs, durch Zusammenstecken mit dem anderen Rohrleitungs- stück verbunden wird, ist dann zweckmäßig vorgesehen, daß das biegesteife Ende des Rohres durch Ausüben von Zug und/ oder Druck auf seine Rohrwandung in den Anschlußquerschnitt verformt wird. Dies läßt sich gegebenenfalls sogar manuell einfach ausführen.

Im Rahmen der Erfindung bleibt eingeschlossen, daß gegebenen- falls das mit dem verformten biegesteifen Ende versehene Rohr außerdem in mindestens einem biegsamen vorgefertigten Abschnitt gebogen wird, beispielsweise etwa um einen rechten Winkel und/oder an mehreren biegsam vorgefertigten Abschnitten jeweils um einen Winkel, wobei alternativ beispielsweise jeweils kleine oder jeweils große aufeinanderfolgende Abwinkelungen vorgenommen werden können. Man kann sogar aufeinanderfolgende Winkeländerungen gegensinnig und/oder in verschiedenen Biegeebenen vornehmen.

Das verformte Ende des Rohres hat im allgemeinen eine merkliche Rückstellkraft in Richtung zum vorgefertigten Anfangszustand. Es ist daher zweckmäßig, wenn das in den Anschlußquerschnitt verformte biegesteife Ende in seinem Verformungszustand gehalten wird. Die Erfahrung zeigt, daß sich das Material dabei allmählich durch interne Umorientierungsvorgänge an den neuen Anschlußquerschnitt "gewöhnt", so daß

0002197

die Haltearbeit im verlegten Zustand zunehmend geringer wird. Zweckmäßig ist es dabei, das in den Anschlußquerschnitt verformte biegesteife Ende sowohl von innen als auch von außen abzustützen, während allerdings einseitige Abstützungen nur an der Innenfläche oder an der Außenfläche in vielen Fällen durchaus genügen können. Um zu vermeiden, daß ein ebenfalls unter Kraftausübung verformbares Ende des Anschlußteils, welches den Anschlußquerschnitt darbietet, seinerseits in unerwünschter Weise verformt wird, ist es ferner zweckmäßig, wenn das verformte biegesteife Ende des Rohres durch vom Anschlußteil unabhängige Mittel gehalten wird.

Das Rohr hat vorzugsweise einen ovalen, ellipsenähnlichen oder - allgemeiner gesagt - abgeflacht gerundeten Querschnitt. Im Rahmen der Erfindung kann man einen solchen Querschnitt nicht nur in einen runden, sondern sogar in einen vieleckähnlichen, z.B. drei- oder rechteckigen bzw. quadratischen, als Sonderfall eines rechteckigen, Querschnitt verformen. Es zeigt sich, daß bei geeigneter Materialwahl, vorgefertigter Anschlußform und/oder Wandausbildung etwa zunächst entstehende Beulen oder Falten sich allmählich regelrecht auf derartige Anschlußquerschnitte ausgleichen.

Im Rahmen der Erfindung ist es somit möglich, die Leitung nur aus ein oder zwei vorgefertigten und gegebenenfalls zu-

0002197

geschnittenen Arten von Rohren, gegebenenfalls in Verbindung mit Rohrverbindern und Leitungsendstücken, herzustellen, wobei Rohrkrümmer oder gesondert gefertigte Übergangsbälge sogar entbehrlich ist, jedoch bedarfsweise, wenn man von der Verformbarkeit keinen Gebrauch machen will, auch eingesetzt werden können.

Während bekannte gattungsgemäße Rohre bisher im allgemeinen durch Kunststoff-Strangpressen hergestellt sind,werden Rohre nach der Erfindung vorzugsweise durch Blasen vorgefertigt,wenn sie aus Kunststoff bestehen.Dies ermöglicht es, wesentlich. geringere Wandstärken als bisher mit solchen Profilgebungen des Kunststoffrohres zu verbinden,daß die aufgabengemäß dem Kunststoffrohr weiterhin für normale Verlegungsfälle zukommende Formhaltigkeit, insbesondere unter der Schwerkraft, beibehalten bleibt und trotzdem die gegebenenfalls zur Versteifung und/ oder zur Ermöglichung von biegsamen Abschnitten erforderlichen Profilierungen, wie Faltenbälge, trotzdem in der gewünschten Weise vorgebildet werden können. Gegebenenfalls kann man allerdings auch andere Herstellungsverfahren wählen, selbst das Stranggießen, wenn man beispielsweise bei hinreichend geringer Materialwandstärke jedenfalls über den größten Teil der Länge des Kunststoffrohres Längsrippen, mögen diese nun innen und/oder außen verlaufen, vorbildet, um die gewünschte Biegesteifigkeit noch zu gewährleisten, andererseits jedoch aufgrund der geringen Wandstärke am Rohrende die Verformbarkeit zu ermöglichen.Ebenfalls wurde das Wickelverfahren als mögliche Herstellungweise,z.B. für Rohre aus Metall, schon erwähnt.

Insbesondere mit der für besonders gute erfindungsgemäße Rohre typischen geringen Wandstärke mindestens von Teilabschnitten des Rohres, wie des verformbaren Endes, ist es zweckmäßig, ein Kunststoffrohr aus einer schwer entflammbaren Kunststoff vorzufertigen. Bei richtiger Dimensionierung und Kunststoffwahl kann es sogar zur Selbstextinktion einer etwa entstandenen Flamme kommen. Aber auch bei größeren Wandstärken, die noch nicht zur Selbstextinktion führen, ist die Ausbildung eines Kunststoffrohres aus einem schwer entflammbaren Kunststoff mindestens zur Hemmung von raumübergreifenden Bränden, ja zur Verhinderung des Brennens überhaupt, sinnvoll. In anderen Anwendungsfällen, bei denen das Material nichtbrennbar sein soll, kommen im Rahmen der Erfindung, insbesondere Baustoffe der Baustoffklasse A1 nach DIN 4102 in Frage.

Die Erfindung betrifft auch ein Rohr, das im Sinne der oben genannten Aufgabenstellung einerseits konventionell, andererseits unter Anpassung seines Endes durch Verformung an einen unterschiedlichen Anschlußquerschnitt einsetzbar ist.

Die eingangs erwähnten formstabilen abgeflachten Kunststoffrohre, die über ein Übergangsstück jeweils auf einen Anschlußflansch von 100 mm Außendurchmesser aufsteckbar sind, haben in der flachen Ausführung ein maximales Außenmaß von 12o (System der Anmelderin nach DE-Gbm 7 224 234) bis 13o mm (System nach DE-Gbm 7 624 506). Wenn man ein ellipsenähnliches ovales abgeflachtes Rohr zugrunde legt, hat man dabei 75 $cm^2$ lichten Innenquerschnitt im Vergleich mit 78 $cm^2$

lichtem Innenquerschnitt eines Rundrohres, an das das ovale
Rohr über ein Übergangsstück anschließbar ist. Theoretisch
könnte man die Fläche, die man durch die Abflachung verliert,
durch größere Breite kompensieren. Aus strömungstechnischen
Gründen nimmt man jedoch den Verlust von 3 cm$^2$ beim Übergang
vom Rundrohr auf das Flachrohr in Kauf.

Ein beispielsweise nicht kreisrundes, z.B. ovales,
Rohr gemäß der Erfindung soll in gleichem Maße gegebenenfalls
auch durch ein Übergangsstück, einen verformbaren Balg o.dgl.,
an einen Zylinderstutzen anschließbar sein. In diesem Fall
wird das Rohr in hergebrachter Weise verwendet.
Außerdem soll das Rohr jedoch auch ohne zusätzliche
gesonderte oder angeformte Übergangsstücke an einen unterschiedlichen Anschlußquerschnitt anschließbar sein.

In diesem Sinne ist ein Rohr aus selbsttragendem integralem
Wandmaterial für eine Ent- oder Belüftungsleitung, welches insbesondere, jedoch nicht ausschließlich, einen lichten Querschnitt
hat, dessen Innenwandumfang gleich dem eines Rundrohres mit nicht
weniger als ca. 80 und nicht mehr als ca. 150 mm Rohrdurchmesser hat, dadurch gekennzeichnet, daß mindestens ein Ende des
Rohres derart dünnwandig aus einem flexiblen Material ausgebildet ist, daß die Wandung des Rohrendes aus dem vorgefertigten lichten Querschnitt in einen unterschiedlichen Anschlußquerschnitt drückt und/oder ziehbar ist. Für die gemäß
der Aufgabenstellung zweite Alternative erhält man so die
Verformbarkeit des an den unterschiedlichen Anschlußquerschnitt anzupassenden Endes des Rohres vorzugsweise

alleine durch manuelle Zug- und/oder Druckausübung, gegebenenfalls auch unter Verwendung von Hilfsmitteln, während andererseits auch eine konventionelle Verlegbarkeit, in diesem Falle bei Fortsetzung der kleinen Wandstärke über weitere Bereiche des Rohres in Leichtbauweise, erreicht werden kann.

Die Erfindung umfaßt dabei sowohl solche Rohre, die insgesamt in Leichtbauweise gestaltet sind, als auch solche, bei denen nur Teilbereiche in Leichtbauweise, d.h. mit geringer Wandstärke, ausgebildet sind, insbesondere das an den unterschiedlichen Anschlußquerschnitt anzupassende Ende.

Das verformbare Ende des Rohres kann beispielsweise biegsam ausgebildet sein, d.h. so, daß die Längsachse des Rohres in dem biegsamen Bereich veränderbar ist. Hierzu bietet sich vorzugsweise die Ausbildung als in der Querschnittsform verformbarer Faltenbalg an.

Ein solcher Faltenbalg kann gleichzeitig auch noch die Funtion eines Rohrkrümmers erfüllen, gegebenenfalls sogar in Verbindung mit einer Wanddurchführung, z.B. in einem Kamin, unter zweimaliger Biegung zunächst durch die Wand und dann aufwärts im Kamin. Um im Kamin eine Ausrichtung des offenen Mündungsabschnitts zum oberen Kaminende zu erhalten, wird zweckmäßig ein biegesteifer Einsatz in das Rohrende, vorzugsweise ein gekrümmtes U-Profil, z.B. in Schienenform, vorgesehen, welcher das biegsame Rohrende im Einbauzustand in dem gewünschten gebogenen Zustand hält. Es kann dabei ausreichen, wenn das Einsatzstück überwiegend nur in dem in den freien Kaminquerschnitt o.dgl. hineinragenden freien Rohrendebereich eingesetzt ist, während in der Wand die Einbaumittel zur Stabilisierung gegebenenfalls ersatzweise, oder zusätzlich, herangezogen werden können.

Ein entsprechender biegesteifer Einsatz kann auch angewandt werden, wenn ein erfindungsgemäßes Rohr konventionell in der Rohrleitung verlegt wird und dabei gesondert gefertigte Faltenbälge, die zweckmäßig auch gemäß der Erfindung gestaltet sind, zur Schaffung von gekrümmten Rohrleitungsabschnitten, auch gegebenenfalls von Einmündungen in einen Kamin, dienen.

Umso kleiner die Wandstärke wird, um bei geeignetem Material die erfindungsgemäße Verformbarkeit des Endes des Rohres zu erreichen, desto eher besteht die Gefahr, daß das Rohr nicht mehr im Einbauzustand formstabil bleibt, sondern gegebenenfalls bereits unter seinem Eigengewicht allmählich zusammenfällt. Einen konsequenten Leichtbau mit geringer Wandstärke und geeigneter Profilierung erhält man durch Ausbildung des Rohres als profiliertes Blasformstück.

Dabei kann ein erfindungsgemäßes Rohr eine Folge biegesteifer und biegsamer Rohrabschnitte bilden, wobei vorzugsweise ein nicht am Rohrende gelegener biegsamer Abschnitt, vorzugsweise eine Vielzahl desselben, als Faltenbalg ausgebildet ist.

Bei Vorhandensein mehrerer Faltenbälge kann zweckmäßig deren Abstand groß gegenüber der Längenerstreckung der benachbarten Faltenbälge sein. Vorzugsweise ist dann außerdem vorgesehen, daß bei Anordnung von einem oder mehreren Faltenbälgen diese als sickenartige Versteifung der Rohrwandung jeweils mit Anordnung nur weniger Falten, vorzugsweise von nur drei Falten, ausgebildet sind.

Gerade die sickenartige Versteifung eines besonders dünnwandigen Rohres ermöglicht einen Leichtbau bisher nicht bekannter Art, während andererseits die Falten mindestens eine geringe, in Sonderfällen auch eine erhebliche Krümmung des Rohres jeweils im Faltenbereich zur Anpassung an Verlegungsbedingungen gestattet.

Man kann das Rohr meterwarenähnlich gleichmäßig ausbilden, indem etwa die sickenartigen Versteifungen äquidistant am Rohr ausgebildet sind. Vorzugsweise hat das Rohr dabei jedoch eine Länge von etwa 80 cm. Dies hat sich besonders für Einbauzwecke im Haushaltsbereich bewährt. In diesem Falle ist es häufig möglich, die Rohre unzugeschnitten mit ganzer Länge zu verwenden. Wenn dagegen ein Zuschnitt nötig ist, zerfallen die Rohre im allgemeinen in solche Teile, die für sich wieder gut wiederverwendbar sind, insbesondere beim Küchenausbau oder beim Ausbau anderer Wohn- und Sanitärräume.

Mindestens einige von nicht am Ende des Rohres gelegenen biegesteifen Rohrabschnitten sind zweckmäßig innen und/oder außen glatt ausgebildet, d.h. wie normale Rohre eines gewünschten, beispielsweise ovalen, rechteckigen oder runden, Querschnitts. Bei den für den Grundaufbau der im wesentlichen geradlinigen Abschnitte der Rohrleitung verwendeten Rohren kann man dabei gänzlich auf Abweichungen der innen und außen glatten Rohrausbildung in den biegesteifen Bereichen verzichten.

Die Erfindung schließt insbesondere auch ein, daß an demselben Rohr mindestens ein sickenartiger Faltenbalg und mindestens ein vielfaltiger Umlenkbalg ausgebildet sind, um so einerseits Funktionen im wesentlichen geradliniger Rohrleitungen und andererseits Rohrkrümmerfunktionen an einem einzigen Rohr verwirklichen zu können, wobei im erstgenannten Fall die Faltenbälge primär zur sickenartigen Versteifung der dünnwandigen Rohrabschnitte und nur sekundär zu weiterer Anpassung an etwa gewünschte krumme Rohrverläufe vorgesehen zu sein brauchen.

Nach einer vorzugsweisen Alternative ist vorgesehen, daß mindestens ein in einen unterschiedlichen Anschlußquerschnitt verformbares Ende des Rohres biegesteif ausgebildet ist, so daß es im wesentlichen die Achsrichtung beibehält, jedoch gegebenenfalls in den unterschiedlichen Anschlußquerschnitt durch Drücken und/oder Ziehen seiner entsprechend ausgebildeten Wände verformt werden kann. Das verformbare biegesteife Ende des Rohres kann dabei gegebenenfalls innen und/oder außen glatt ausgebildet sein. Man kann jedoch auch um die Außenfläche des verformbaren biegesteifen Endes Rastnasen in Gestalt von Ausbeulungen der Rohrwandung zum Eingriff in Rastausnehmungen eines Rohrverbinders, z.B. einer umgreifenden Schelle oder einer aufgeschobenen Muffe, ausformen. Theoretisch könnte man derartige Rohrverbinder auch einschieben, was jedoch meist aus strömungstechnischen Gründen weniger in Frage kommt.

Man kann dabei die Anordnung so treffen, daß im Anwendungsfalle das Ende des Rohres, welches die Rastnasen trägt, abgeschnitten werden kann und noch hinreichend glattes Rohrende übrigbleibt, welches seinerseits noch in einen unterschiedlichen Anschlußquerschnitt bedarfsweise verformt werden kann. Diese Bedingung ist jedoch nicht notwendig.

Nach der zweiten vorzugsweisen Alternative kann aber auch mindestens das Rohrende oder das ganze Rohr flexibel, z.B. als Faltenbalg, gebildet sein, wenn nur die Wand aus selbsttragendem integralem Material besteht, z.B. homogen aus demselben Material ausgebildet ist, z.B. homogen aus Kunststoff oder Metall.

Vorzugsweise ist die Anordnung so getroffen, daß ein abgeflacht gerunderter, vorzugsweise ovaler, Rohrquerschnitt mindestens des in den Anschlußquerschnitt verformbaren Rohrendes, zweckmäßig der überwiegenden oder ganzen Rohrlänge, vorgesehen ist, und dieses Rohrende, bzw. beide Rohrenden, eine solche Ausbildung der Wandung nach Material und Gestalt haben, daß der vorgefertigte Rohrquerschnitt in einen konventionellen runden und/oder gar rechteckigen, beispielsweise quadratischen oder langgestreckten rechteckigen, Querschnitt verformbar ist.

Es hat sich gezeigt, daß mindestens die Wandstärke des verformbaren Endes des Rohres, bei normalen zur Rohrverlegung dienenden Rohren außer an den Enden der Rohrleitung sogar das ganze Rohr, zweckmäßig höchstens etwa 1,5 mm beträgt. Bevorzugt ist dabei eine Wandstärke eines verformbaren biegesteifen Endes des Rohres - und gegebenenfalls entsprechender biegesteifer Zwischenabschnitte des Kunststoffrohres - von 1 mm, wobei man Toleranzen von 0,5 mm nach oben und ca. 0,2 mm nach unten zweckmäßig zusetzen kann und wobei in Faltenbalgbereichen die Wandstärke bis zu etwa 0,2 mm abnimmt.

Bei eng gefalteten Faltenbälgen, auch, wenn diese bis in Anlage ihrer Falten axial stauchbar oder aus einer solchen Lage axial reckbar sind, wird als Wandstärke stets die Wandstärke zwischen Außen- und Innenseite einer Faltenfläche, nicht jedoch der Abstand zwischen Maximum und Minimum der Faltung verstanden.

Bei Kunststoffrohren ist dabei vorzugsweise das Material des Kunststoffrohres Polypropylen, zweckmäßig vollmassiv ohne Armierung. Polypropylen ist u.a. besonders gut blasformbar und zeigt bei der geringen Wandstärke von ca. 1 mm einerseits eine gute Formhaltigkeit im Verlegezustand und andererseits die gewünschte flexible Verformung seines Rohrendes bei Gewährleistung einer hinreichen Biegesteifigkeit selbst an Rohrenden, die außen und innen glatt wie normale Rohre mit vorgegebenem Querschnitt ausgebildet sind.

Das Polypropylen wird ferner zweckmäßig durch Zusätze schwer entflammbar eingestellt, zweckmäßig entsprechend Ziffer B1 von DIN 4102.

Ein erfindungsgemäßes Rohr mit bedarfsweise verformbarem,
sonst biegesteifem und normal verlegbarem Ende kann auch
als Wanddurchführungsteil mit eingebauter Jalousie ausgebildet sein. An die Stelle einer klappbaren Jalousie kann
bedarfsweise auch ein anderer Luftführungseinsatz, beispielsweise ein fest eingebautes Gitter, gegebenenfalls auch in
Verbindung mit einem eingebauten Ventilator, treten.

Zu diesem Zweck ist dann ein Ende des Rohres im Sinne
der Erfindung in einen unterschiedlichen Anschlußquerschnitt
verformbar und das andere Ende als steifer Tragrahmen des Luftführungseinsatzes ausgebildet. Es versteht sich, daß ein solches Rohr außerdem noch alle Eigenschaften der weiter
oben geschilderten Rohre, z.B. glatte Rohrabschnitte,
die mit sickenartigen Versteifungen wechseln, haben kann.

Der Tragrahmen geht zweckmäßig mit einem querschnittsverändernden Übergangsstück aus dem übrigen Rohr hervor. Dabei
ist zweckmäßig die Wandstärke des Tragrahmens - und gegebenenfalls des Übergangsstücks - größer als die des übrigen
Rohres.    Zur weiteren Versteifung kann dann der Tragrahmen
noch profiliert, vorzugsweise als eingestülptes Hohlprofil
ausgebildet sein. Der Tragrahmen bildet dann zweckmäßig an
der dem übrigen Rohr zugewandten Seite eine Anschlag-

schulter, um ihn gegebenenfalls fest außenseitig an eine Mauerdurchbrechung anschlagen lassen zu können, indem man den Fort-satz des Rohres bis zu dem bedarfsweise in einem unterschiedlichen Anschlußquerschnitt verformbaren Ende durch die Mauerdurchbrechung hindurchzieht.

eines Kunststoffrohres Eine derartige Gestaltung des Tragrahmens/kann man auch durch Blasformen eines ganzen Kunststoffstücks erreichen, indem man bei dem vertikalen Blasformen den Tragrahmen am Fuß des Vorformlings ausbildet. Man kann dabei das Verfahren so führen, daß sich, u.a. unter der Einwirkung der Schwerkraft, in diesem Bereich mehr Material des Vorformlings ansammelt als an den weiter oben befindlichen Bereichen, die erfindungsgemäß insbesondere am oberen Ende schließlich die zur Verformung in den anderen Anschlußquerschnitt gewünschte geringe Wandstärke haben sollen.

Zweckmäßig am Kopfteil des Vorformlings kann man beim Blasformen zugleich auch noch Lamellen einer Klappjalousie gewinnen, die als Luftführungseinsatz in den Tragrahmen eingesetzt werden. Dabei kann man die Lamellen einschließlich ihrer Achsstummel jeweils einstückig an diesem Kopfstück des Blasformlings blasformen, ausschneiden oder ausstanzen und dann zusammen mit ihren vorgebildeten Achsstummeln in die Bohrungen des Tragrahmens einsetzen. Dies stellt sicher, daß die Lamellen der eingesetzten Klappjalousie aus demselben Material bestehen, wie das übrige Kunststoffrohr, was eine für die Prüfung des Kunststoffrohres auf Schwerentflammbarkeit maßgebliche Bedingung ist. Die Lamellen der Klappjalousie werden dabei zweckmäßig bei ovalen Kunststoffrohren längs der Flachseiten des Kopfes des Vorformlings durch Blasen ausgebildet.

Auch bei dem erfindungsgemäßen Rohr können innerhalb einer Einbaustrecke des Rohres zwischen der Rückseite des Tragrahmens und einem weiter zum anderen Ende des Kunststoffrohres gelegenen Querschnitt um die Außenseite des Kunststoffrohres verteilte Greifnasen in der Wandung des Kunststoffrohres ausgeformt sein. Diese Greifnasen können dazu dienen, sich in der Wandung zu verhaken, wenn das Rohr unter Anschlag des Tragrahmens von der Außenseite des Mauerwerks durch dessen Durchbrechung hindurchgezogen wird. Eine widerhakenartige Haltekraft kann dabei dadurch gewonnen werden, daß das Rohr zwischen dem Tragrahmen und den Greifnasen, gegebenenfalls zusätzlich auch noch innerhalb der Einbaustrecke an der dem Tragrahmen abgewandten Seite der Greifnasen, als axial wirksames Federelement ausgebildet ist, um auf diese Weise auf die Greifnasen eine durch das Hineinziehen des Rohrs in die Durchbrechung des Mauerwerks gewonnene Eingriffspannung ausüben zu können. Ein solches Federelement kann vorzugsweise als Faltenbalg mit einer größeren Faltenzahl als der einer Sicke und einer kleineren Faltenzahl als der eines 90°-Umlenkbalges ausgebildet sein.

Die Greifnasen sind zweckmäßig nicht an die Wandstärke des Materials angesetzt, sondern im Falle eines Kunststoffrohrs in dessen Wandung beim Blasen mit ausgeformt, so daß die Greifnasen, die aus der Wandung hervortreten, kleinere Wandstärke als die Wandung des Kunststoffrohres haben können, aus der die Greifnasen als Ausstülpungen hervortreten. Zweckmäßig sind dabei die Greifnasen pyramidenförmig ausgebildet. Der oben erwähnte Widerhakeneffekt, der durch die genannten Federelemente verstärkt werden kann, kann dabei dadurch gewonnen werden, daß die Pyramide eine dem Tragrahmen zugewandte Seite aufweist, die zur Pyramidenspitze hin widerhakenartig konkav nach oben gekrümmt ist. Dabei kann zur Erleichterung der Einführung der Greifnasen die dem Rahmen abgewandte Seite der Pyramide als Gleitfläche ausgebildet sein.

Ein derartiges mit einem Tragrahmen versehenes Rohr ist zweckmäßig auch zwischen der Einbaustrecke und einem dem Tragrahmen fernen, bedarfsweise in einen unterschiedlichen Anschlußquerschnitt verformbaren Ende über mindestens einen Längenbereich biegsam, vorzugsweise als Faltenbalg ausgebildet. Ein solcher Faltenbalg kann beispielsweise ein 90°-Umlenkbalg sein. Es kann aber auch ein Faltenbalg mit einer kleineren Faltenzahl als der eines 90°-Umlenkbalges, jedoch einer größeren Faltenzahl als der eines innerhalb der Einbaustrecke vorgesehenen axial wirksamen Federelements stattdessen oder zusätzlich vorgesehen sein. Vorzugsweise sind dabei mindestens zwei Faltenbälge unterschiedlicher Faltenzahl vorgesehen.

Um sicherzustellen, daß gerade bei Anordnung vieler Falten am Rohr dieses nicht schließlich seine Formstabilität verliert, empfiehlt es sich, mindestens einige biegesteife Rohrabschnitte, die zwischen verschiedenen Faltenbälgen des Rohres angeordnet sind, untereinander etwa gleichlang ausgebildet zwischenzuschalten.

Es zeigt sich, daß bei einer Folge von glatten Rohrabschnitten und gefalteten Rohrabschnitten, insbesondere auch sickenartig gefalteten Rohrabschnitten, die glatten Rohrabschnitte, die dieselbe oder eine vergleichbare Wandstärke wie das in einen anderen Anschlußquerschnitt verformbare Ende aufweisen, bei Druck auf die Wandung zwar nachgeben, durch die Formhaltewirkung der Falten jedoch von selbst wieder in ihre ursprüngliche Konfiguration elastisch zurückgehen.

Ein Rohr gemäß der Erfindung kann mit einem freien Ende oder mit beiden jeweils in ein Anschlußteil ein- oder auf ein Anschlußteil aufgesteckt sein. Dieses Anschlußteil kann dabei entweder ein weiterführender Rohrleitungsabschnitt, sogar ein weiterführendes Kunststoffrohr oder Rohr aus gewickeltem Metall, sein, oder aber auch ein auf das Rohr aufschiebbarer, gegebenenfalls gar einschiebbarer, Rohrverbinder, vorzugsweise eine Muffe oder auch eine Schelle. Um zu verhindern, daß das in einen unterschiedlichen Anschlußquerschnitt verformbare Ende des Rohres ungewollte Formänderungen durchmacht, ist vorzugsweise das die Steckverbindung bildende Ende des Anschlußteils formsteif ausgebildet. Dieses Anschlußteil kann dabei ein normaler Anschlußstutzen eines Haushaltsgerätes, einer Dunstabschlußhaube oder gegebenenfalls auch eines konventionellen Mauerkastens, gegebenenfalls aber auch ein einfaches Wasserleitungsrohr aus Kunststoff oder irgendein anderes bekanntes Rohr sein, welches nach Material und/oder Gestaltung, insbesondere Wandstärke, biege- und formsteif ausgebildet ist.

Die Erfindung läßt hierbei insbesondere folgende Alternative zu:

Wenn ein erfindungsgemäßes Rohr konventionell angeschlossen werden soll, ist zweckmäßig der Anschlußquerschnitt des die Steckverbindung bildenden Endes des Anschlußteils kompelmentär zu dem vorgefertigten Anschlußquerschnitt des in einen unterschiedlichen Anschlußquerschnitt verformbaren Endes des Rohres. In diesem Falle wird die Möglichkeit des erfindungsgemäßen Rohres, daß mindestens sein eines Ende in einen unterschiedlichen Anschlußquerschnitt verformbar ist, nicht nutzbar gemacht. Nutzbar ist dabei jedoch der Leichtbau des Rohres.

Alternativ kann jedoch der Anschlußquerschnitt des die Steckverbindung bildenden Endes des Anschlußteils komplementär zu

der Anschlußquerschnitt sein, in den das vorgefertigte Ende des Rohres verformbar ist. . In diesem Falle hält der Anschlußquerschnitt des die Steckverbindung bildenden Endes des Anschlußteils das verformte angeschlossene Ende des Rohres in seinem Verformungszustand.

In beiden Fällen, ob nun das in den unterschiedlichen Anschlußquerschnitt verformbare Ende des Rohres tatsächlich verformt ist oder nicht, wird zweckmäßig das verformbare Ende des Rohres beidseitig gehalten. Dies gilt insbesondere auch dann, wenn ein ursprünglich an seinem Ende mit Rastnasen, z.B. zum Eingriff mit einer umgreifenden Schelle oder Muffe, versehenes Rohr auf eine kürzere Länge zugeschnitten wird, so daß beispielsweise zwischen gefalteten Bereichen liegende glatte Bereiche zum neuen Ende des Rohres werden. In derartigen Fällen ist zweckmäßig an dem die Steckverbindung bildenden Ende des Anschlußteils ein formsteifes Halteelement ausgebildet, das gemeinsam mit der Wand des Anschlußteils einen Einsteckspalt für das Ende des Rohres in der Steckverbindung bildet. Man erhält dabei insbesondere dann einen festen Halt, wenn sich der Einsteckspalt von seiner Einstecköffnung nach hinten allmählich verjüngt. Der Einsteckspalt kann dabei gegenüber der Einsteköffnung des Anschlußteils zurückgesetzt sein. Dies ist besonders dann vorteilhaft, wenn in dem Bereich zwischen dem freien Ende des Anschlußteils und dem Beginn des Einsteckspalts zusätzlich noch im Anschlußteil komplementäre Elemente, z.B. Öffnungen, zum Zusammenwirken mit am Ende eines anderen Rohres vorgesehenen Rastnasen vorgesehen sind. Man kann dann dasselbe Anschlußteil sowohl unter Einschieben eines glatten Rohrendes oder eines entsprechend verformbaren mittleren Rohrabschnitts nach Auseinanderschneiden des Rohres in dessen Bereich halten, oder alternativ ein nicht zerschnittenes Rohr so in den Anschlußteil einsetzen, daß es in üblicher Weise zu einem Einschnappen der Rastnasen in den Rastausnehmungen des Anschlußteils kommt. Beide Anschlußmöglichkeiten können so alternativ nebeneinander zur Verfügung gestellt werden.

Die Erfindung wird im folgenden anhand schematischer Zeichnungen an mehreren Ausführungsbeispielen an Kunststoffrohren noch näher erläutert. Es zeigen:

Fig. 1      eine verlegte Entlüftungsleitung gemäß der Erfindung;

Fig. 1a     einen Versteifungseinsatz;

Fig. 2      mit gedachtem Anschluß an den Punkten A1, B1 und C1 eine Ausführungsform eines Kunststoffrohres gemäß der Erfindung, und zwar in viermal unterbrochener Darstellung;

Fig. 3      einen Schnitt nach der Linie III-III in Fig. 2 für ein Kunststoffrohr mit Verformbarkeit seines Endquer-

schnitts an den äußeren Anschlußquerschnitt eines Zylinderstutzens mit 125 mm Durchmesser;

Fig. 4     einen Schnitt nach der Linie IV-IV in Fig. 3;

Fig. 5     eine Endansicht schräg von vorne auf ein ovales Kunststoffrohr gemäß den Fig. 2 bis 4 mit in einen zylindrischen Anschlußquerschnitt verformtem Ende;

Fig. 5a     einen Querschnitt nach der Linie I-I in Fig. 5;

Fig. 5b     einen Querschnitt nach der Linie II-II in Fig. 5;

Fig. 6     einen Querschnitt durch einen als Aufschubmuffe ausgebildeten Rohrverbinder in Anpassung an ein Kunststoffrohr gemäß den Fig. 2 bis 5 im Schnitt nach der Linie VI-VI in Fig. 8;

Fig. 7     eine im oberen Zeichnungsteil zur Innendarstellung teilweise geschnittene Seitenansicht des Rohrverbinders nach Fig. 6;

Fig. 8     eine Draufsicht auf den Rohrverbinder gemäß Fig. 6;

Fig. 9     einen Querschnitt längs der Achse des Rohrverbinders gemäß Fig. 6 mit beidseitig eingeschobenen und unterschiedlich gehaltenen Rohrenden;

- 27 -

0002197

Fig. 1o     ein alternatives Kunststoffrohr mit einbaubarer
            Klapplamellenjalousie;

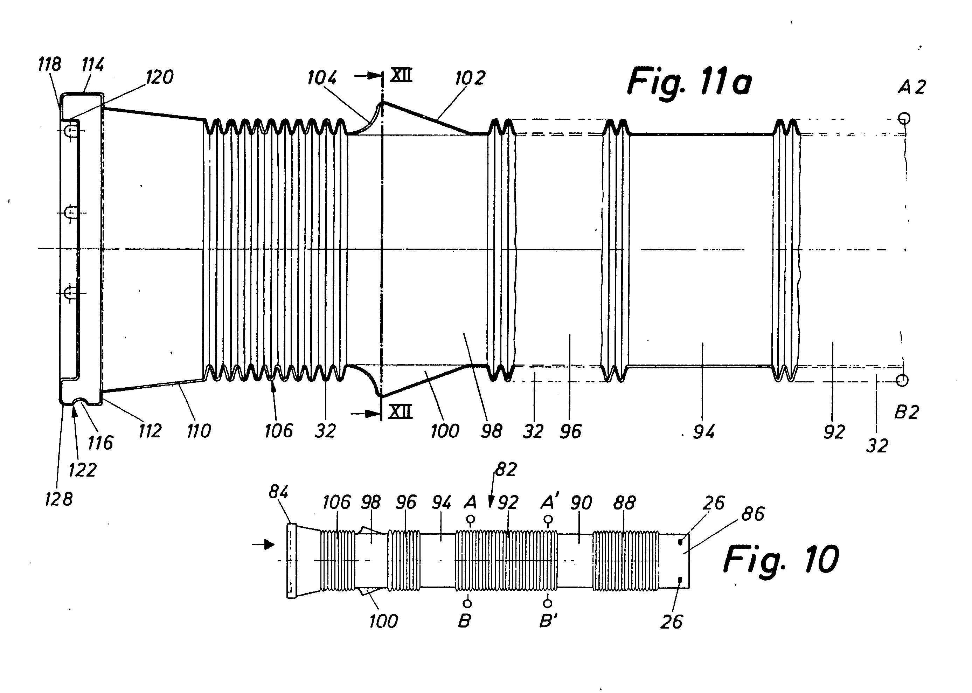

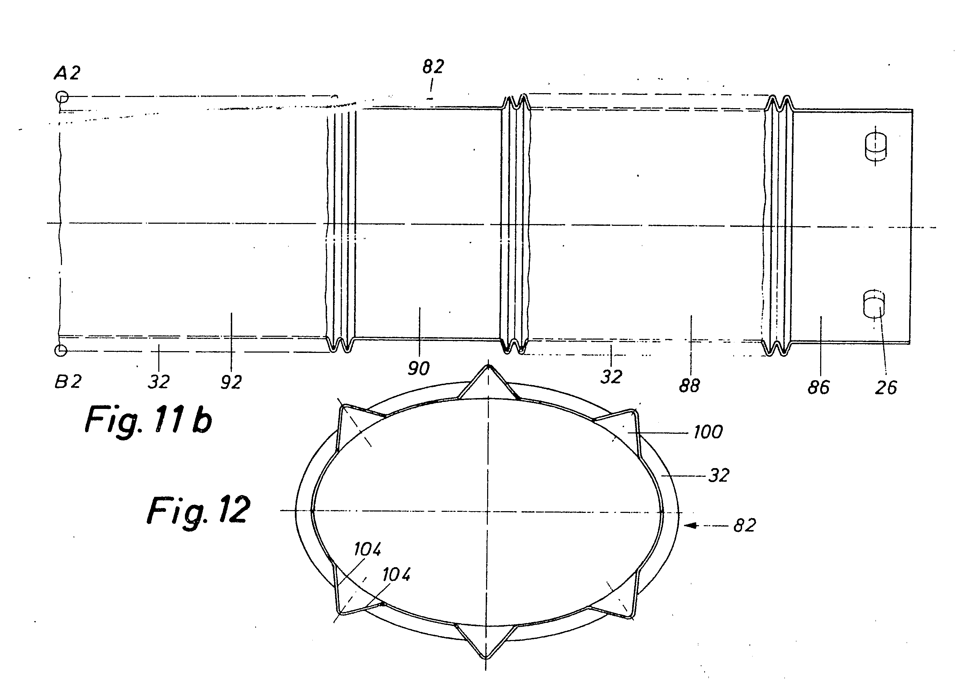

Fig. 11a und Fig. 11b dasselbe Kunststoffrohr in größerem
            Maßstab mit Anschluß an den Punkten A2 und B2;

Fig. 12     einen Schnitt in Fig. 11a nach der Linie XII-XII;

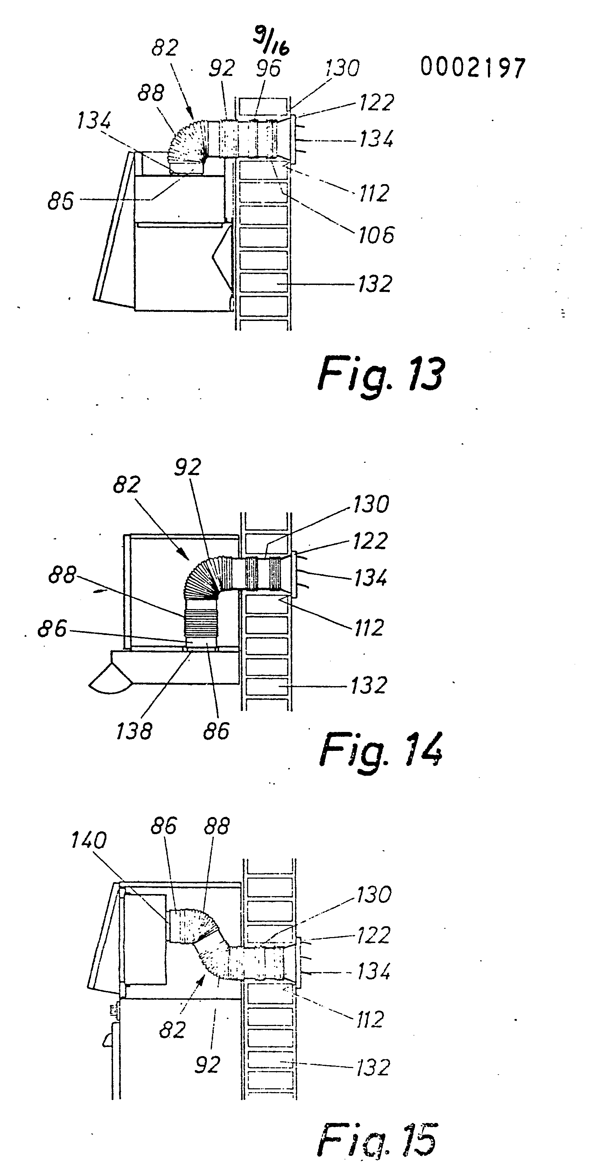

Fig. 13, 14 und 15 drei unterschiedliche direkte Anschlußmöglichkeiten eines Kunststoffrohres gemäß Fig.1o an
            einem unmittelbar an einer nach außen führenden Wand-
            durchbrechung innen anschließenden Gerät, insbeson-
            dere einer Dunstabzugshaube;

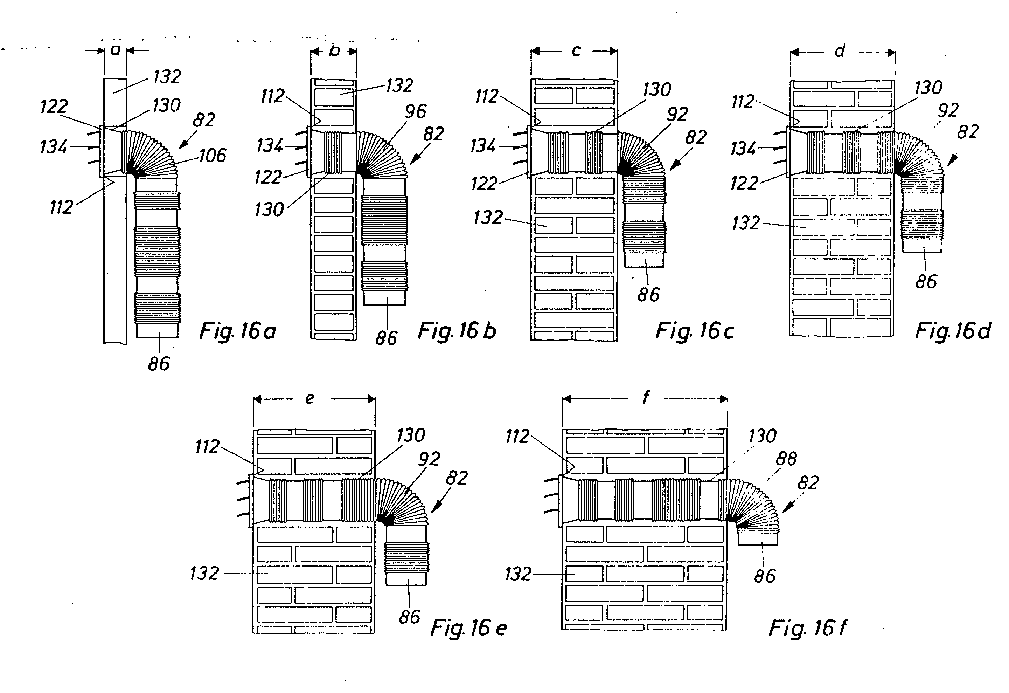

Fig. 16a bis 16f Einbaumöglichkeiten des Kunststoffrohres gemäß
            Fig. 1o in verschieden dickem Mauerwerk, insbesondere
            Außenmauerwerk;

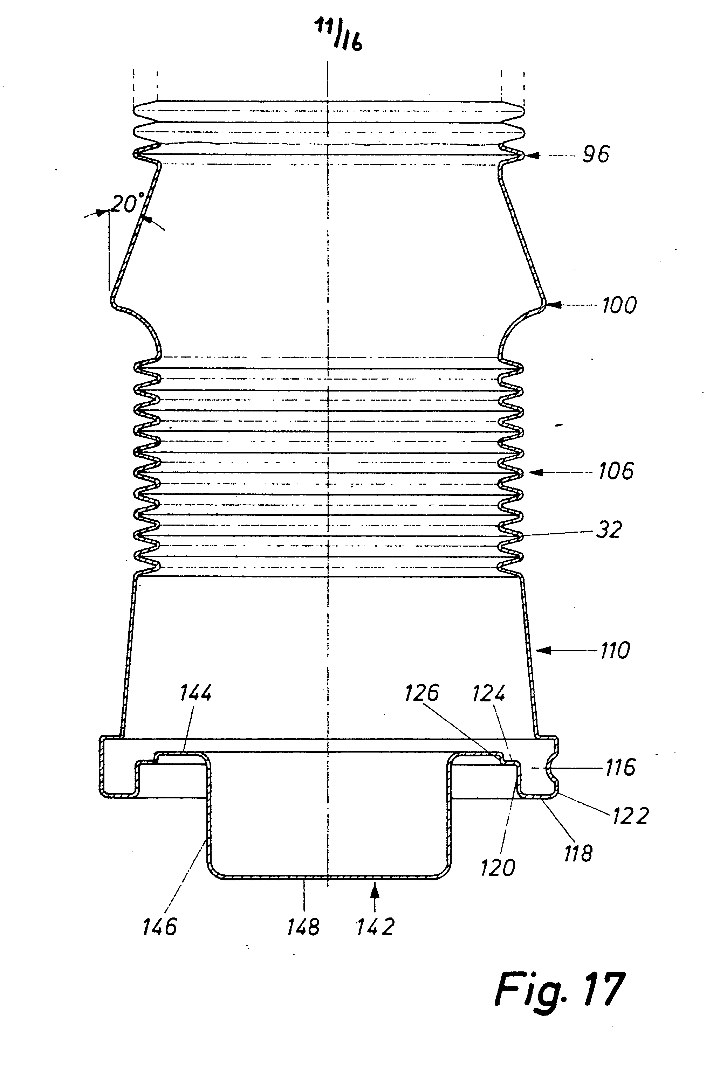

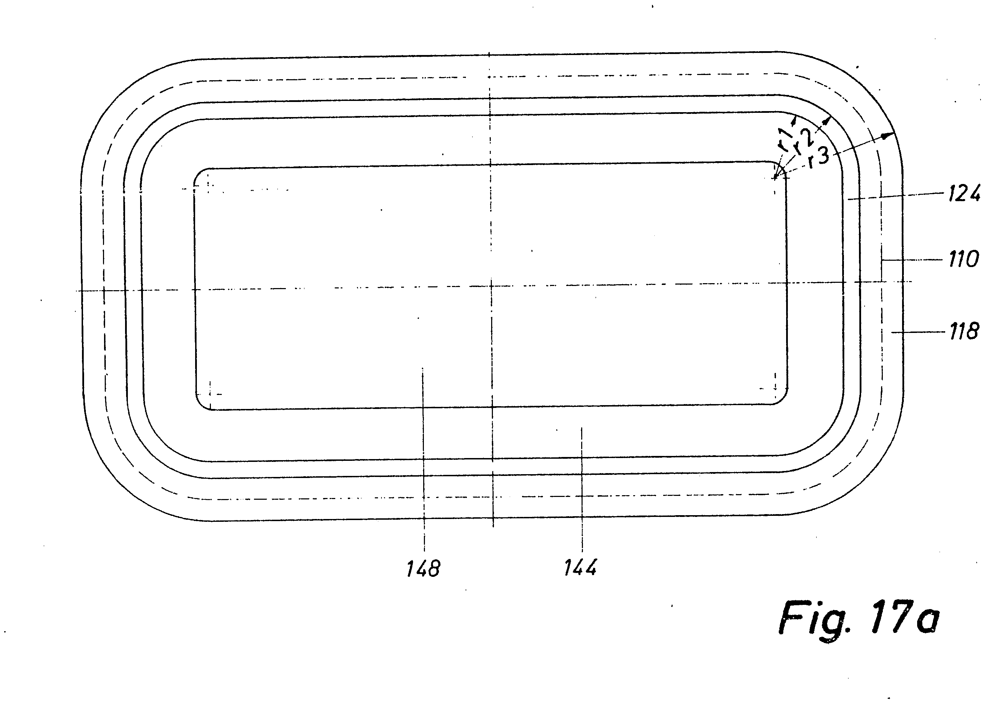

Fig. 17     einen Längsschnitt längs der Achse des Fußstücks
            eines Blasformstücks, aus dem das Kunststoffrohr
            gemäß Fig. 1o zuschneidbar ist;

Fig. 17a    eine Draufsicht auf die in Fig. 17 links dargestellte Stirnseite des Fußteils des Blasformstücks;

Fig. 17b eine Draufsicht auf die Schmalseite des Kopfstücks eines Blasformstücks, aus dem das Kunststoffrohr gemäß Fig. 1o zuschneidbar ist;

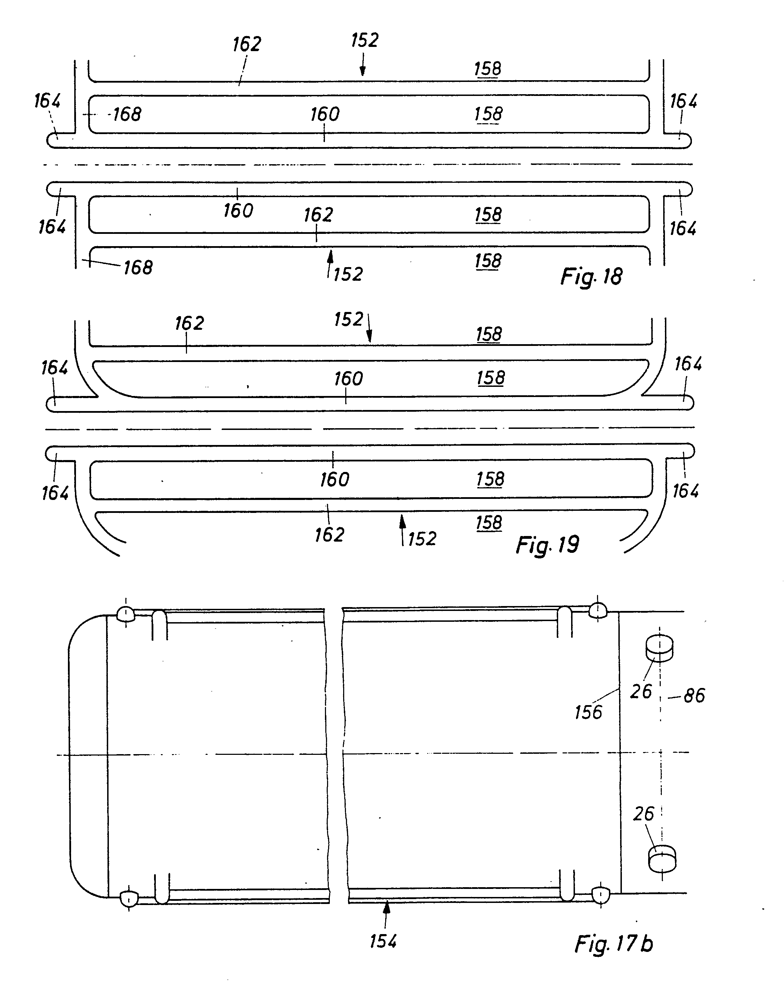

Fig. 18 und Fig. 19 zwei alternative Draufsichten auf die Breitseite des Kopfstücks gemäß Fig. 17 mit zwei Arten vorgebildeter Lamellen einer Klappjalousie zum Einsetzen in den Tragrahmen des Kunststoffrohres gemäß Fig. 10;

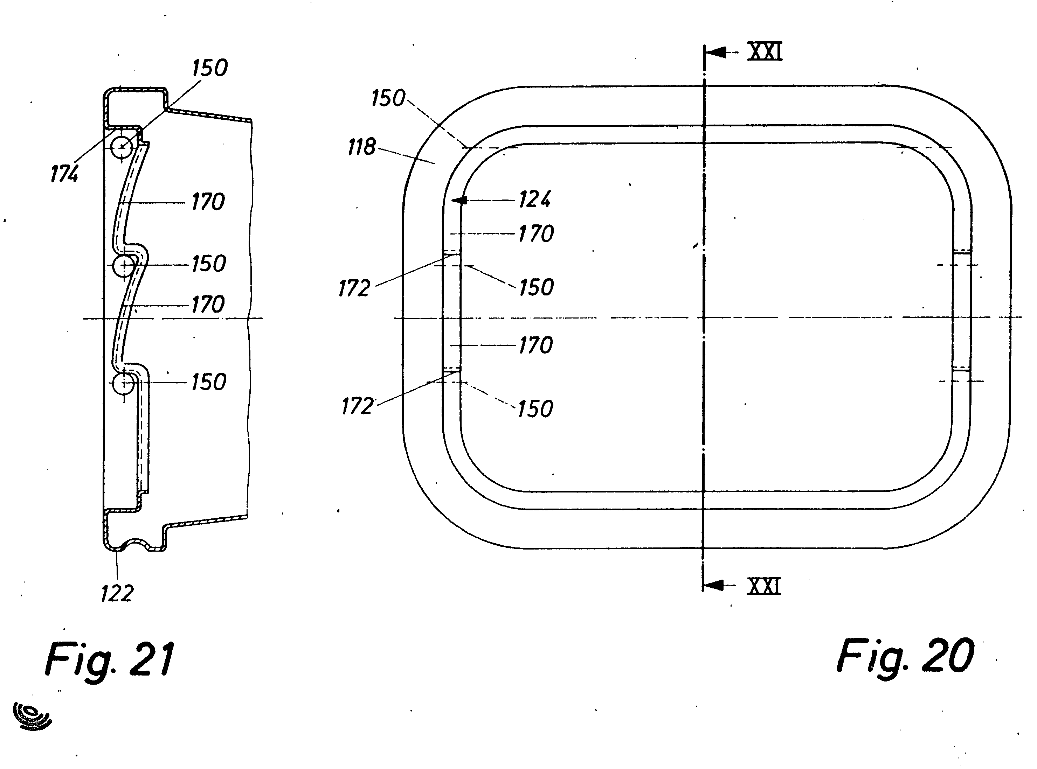

Fig. 20 eine Draufsicht auf die Stirnseite eines Kunststoffrohres gemäß Fig. 10 im Bereich seines mit Lamellen einer Klappjalousie versehbaren Tragrahmens in alternativer Ausbildung desselben;

Fig. 21 einen Schnitt nach der Linie XXI-XXI in Fig. 20;

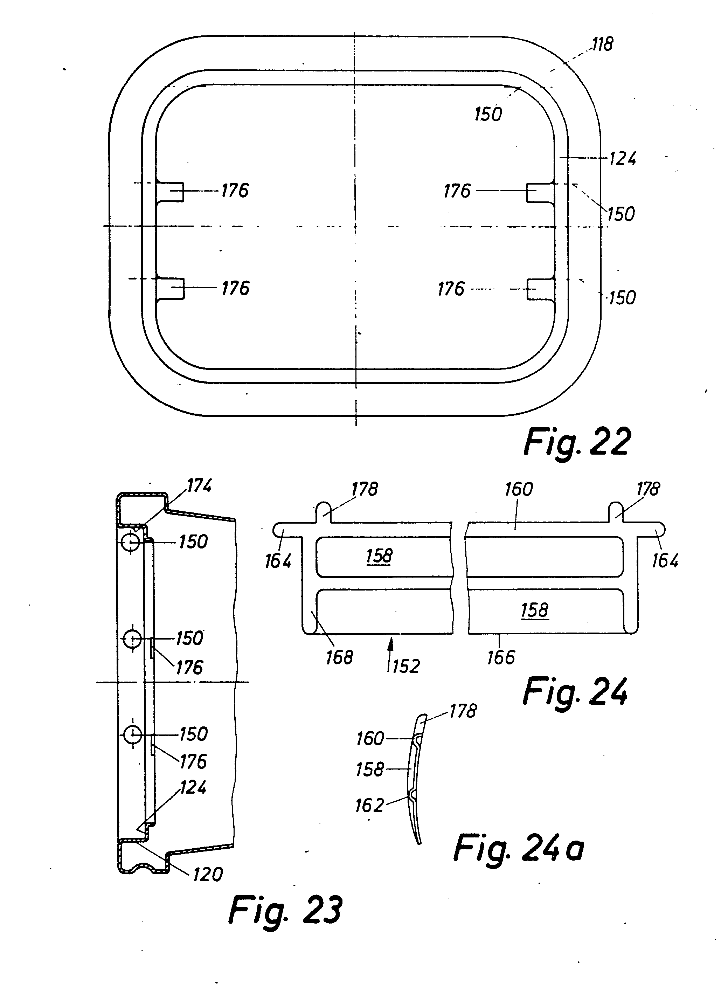

Fig. 22 eine Draufsicht entsprechend Fig. 20 einer bevorzugten Variante;

Fig. 23 einen Schnitt entsprechend Fig. 21 der Variante nach Fig. 22;

Fig. 24 eine Draufsicht auf eine der Variante gemäß Fig. 20 und Fig. 23 angepaßte Lamelle einer Klappjalousie;

Fig. 24a eine Queransicht der Lamelle gemäß Fig. 24;

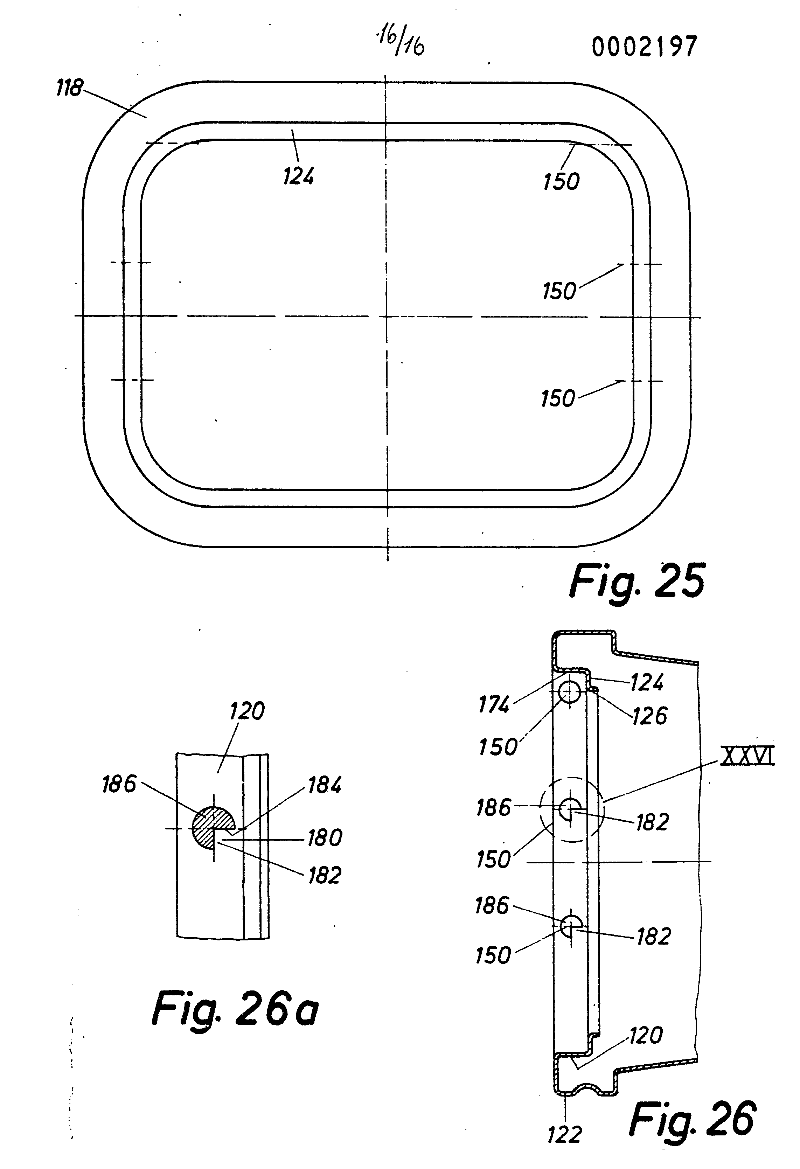

Fig. 25 eine Draufsicht gemäß Fig. 20 einer weiteren Variante;

Fig. 26 einen Schnitt entsprechend Fig. 21 der weiteren Variante nach Fig. 25; und

Fig. 26a eine vergrößerte Ausschnittszeichnung des Details XXVI aus Fig. 26 im Maßstab 2 : 1.

Alle nachfolgend beschriebenen Kunststoffrohre, Rohrverbinder, Einsatzstücke (Fig. 1a) und Lamellen einer Klappjalousie eines endseitigen Kunststoffrohres bestehen aus schwer entflammbarem Polypropylen gemäß DIN 4102, Ziffer B1, bei dem ein hochkristallines Polypropylen mit hohem Molekulargewicht und hochwärmestabilisiert durch Zusatz einer Bromverbindung mit Antimontrioxid schwer entflammbar eingestellt ist. Die Kunststoffrohre einschließlich aller Elemente einer etwa eingebauten Klappjalousie sind dabei Blasformstücke; die Rohrverbinder und Einsatzstücke sind Spritzgußteile.

Fig. 1 zeigt eine mögliche Verlegung einer Entlüftungsleitung 2 einer Dunstabzugshaube 4 auf Hängeschränken 6 einer Küche, und zwar im Winkel zwischen der Oberseite 8 der Hängeschränke, auf der auch die Montage erfolgt, und zwei Küchenwänden 10 derart, daß aufgrund der flachen Ausbildung der Entlüftungsleitung 2 diese von in der Küche stehenden Personen nicht mehr sichtbar ist.

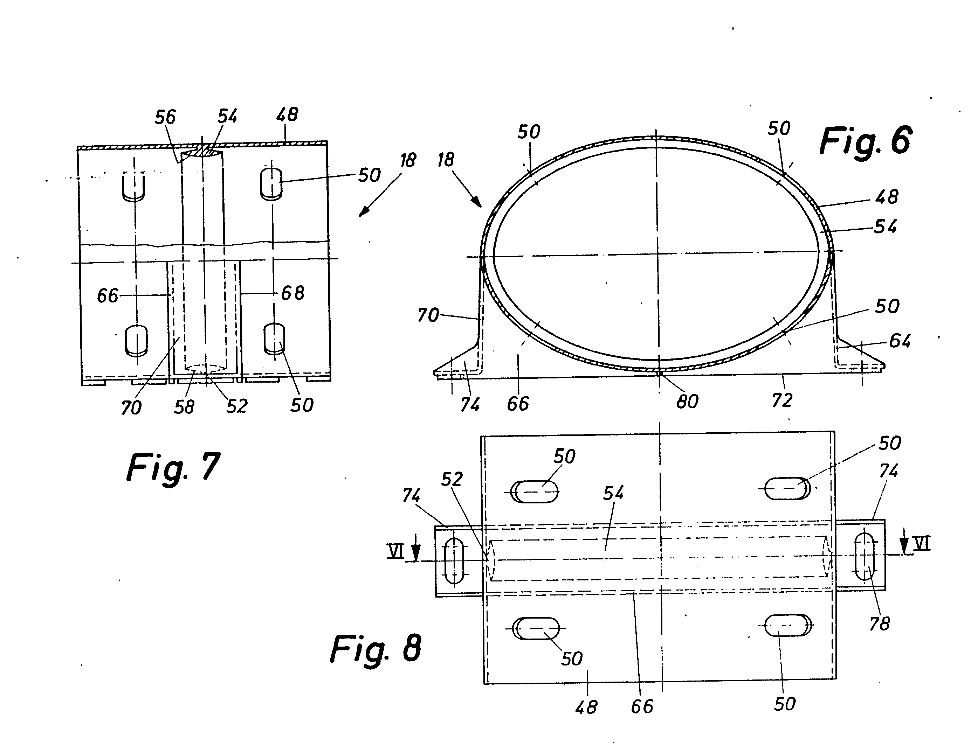

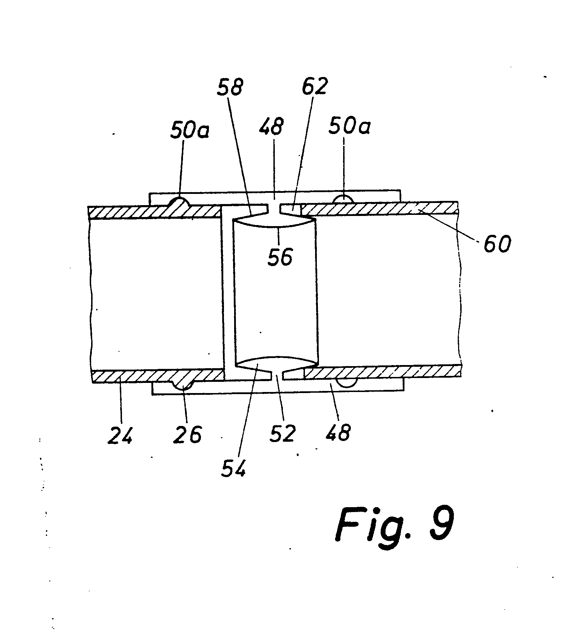

Die Dunstabzughaube 4 hat einen nach oben ragenden zylindrischen Anschlußstutzen 12 mit einem Außendurchmesser von 100 mm (konventionell) oder auch 125 mm (im Rahmen der Erfindung bevorzugt). Auf den zylindrischen Außenumfang des Anschlußstutzens 12 ist das eine Ende 14 eines Faltenbalges 16 aufgeschoben und gegebenenfalls in an sich bekannter Weise zusätzlich abgedichtet. Das in Fig. 1 nicht sichtbare andere Ende des Faltenbalges 16 ist in einen muffenartigen Rohrverbinder 18 gemäß Fig. 6 bis 8 eingeschoben, wobei die Verbindung nach einer der beiden Alternativen nach Fig. 9 erfolgen kann. Der Rohrverbinder 18 hat dabei den in Fig. 6 bis 8 dargestellten ellipsenähnlichen ovalen Querschnitt, in den naturgemäß auch das aufgenommene Ende des Faltenbalges 16 verformt ist. Der Faltenbalg 16 dient hierbei ersichtlich sowohl als 90°-Rohrkrümmer als auch als Übergangsstück von einem zylindrischen ersten Anschlußquerschnitt an dem Anschlußstutzen 12 in einen elliptischen zweiten Anschlußquerschnitt im Rohrverbinder 18, in den dieses Ende des Faltenbalges eingesteckt ist. Der Rohrverbinder 18 ist dabei an seinem dem freien Küchenraum zugewandten Ansatz 19 auf die Oberseite der Hängeschränke aufgeschraubt. Man kann auch den in Fig. 1 nicht dargestellten hinteren Ansatz auf die Oberseite 8 der Küchenschränke 6 aufschrauben. Bevorzugt wird es jedoch, diesen Ansatz wegzubrechen, um so eine möglichst enge Verlegung der Entlüftungsleitung zwischen Oberseite 8 der Küchenschränke und Küchenwand 1o zu ermöglichen und zugleich den Montageaufwand minimal zu halten.

Als Faltenbalg 16 kann jeder beliebige Faltenbalg dienen. Bevorzugt wird jedoch ein solcher Faltenbalg 16, der nach Material, Herstellung und Konfiguration in seinen gefalteten Bereichen den mit einer Vielzahl von Faltungen versehenen gefalteten Bereichen später noch beschriebener Kunststoffrohre entspricht und dessen Endabschnitte ebenso wie die in einen anderen Anschlußquerschnitt verformbaren Endabschnitte der ebenfalls später noch beschriebenen Kunststoffrohre ausgebildet sind.

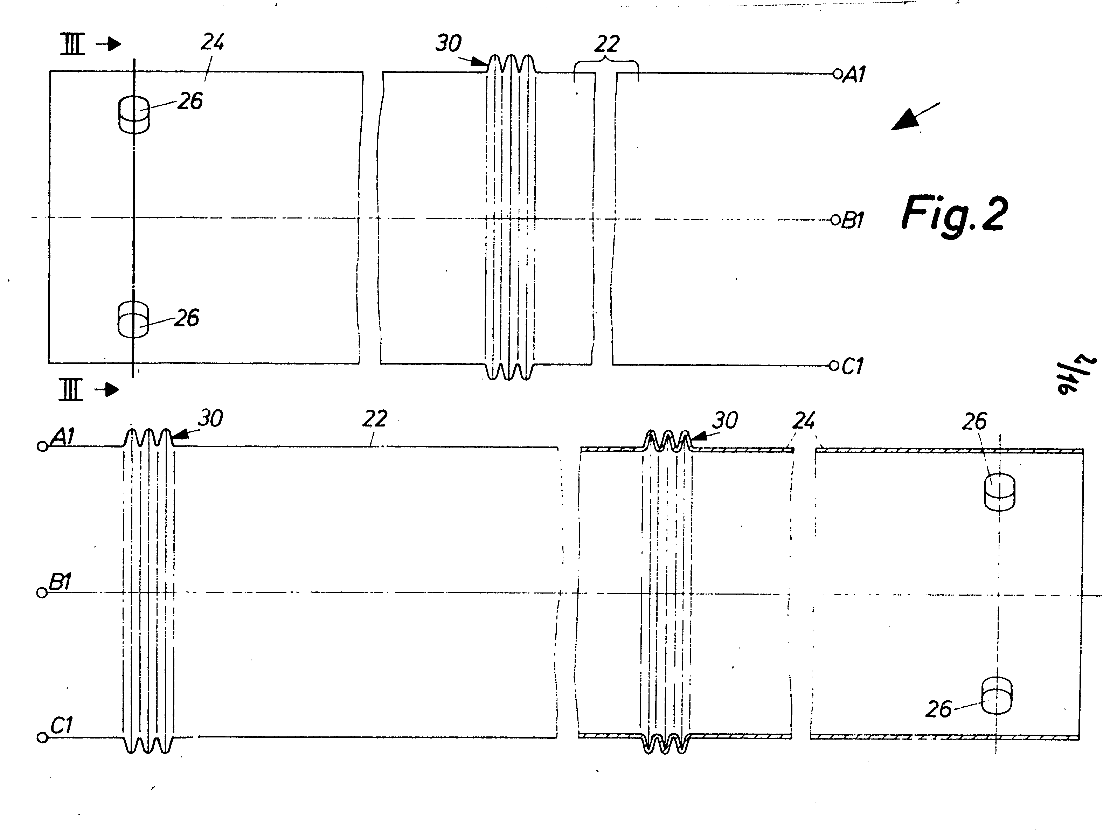

Ein solches Kunststoffrohr 2o in erster Ausbildung ist in die andere Seite des Rohrverbinders 18 eingesteckt und mehr im einzelnen anhand der Fig. 2 bis 4 beschrieben.

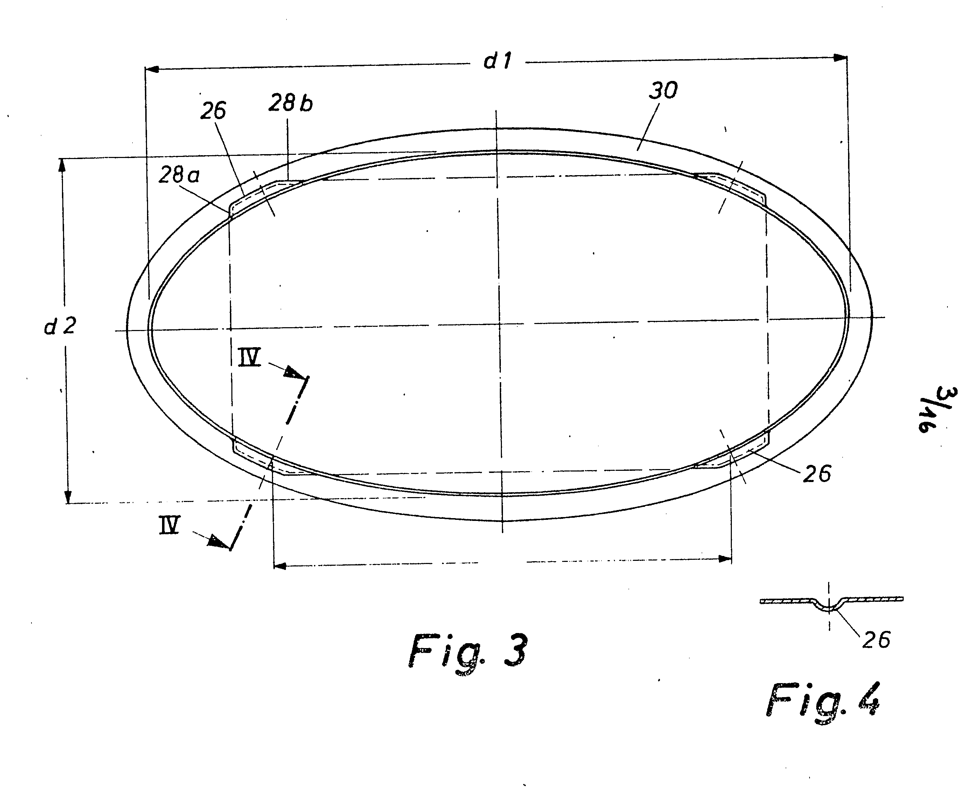

Es hat eine Länge von 800 (± 10) mm, in den innen und außen glatten Bereichen eine Wandstärke von 1,0 (+ 0,5, - 0,2) mm und eine dem inneren Anschlußquerschnitt des Rohrverbinders 18 entsprechende etwa elliptisch-ovale langgestreckte Form. Diese hat in den glatten Bereichen 22 bei Anschluß der Entlüftungsleitung 2 an einen Anschlußstutzen mit 125 mm Ausmaß einen größten Außendurchmesser d1 Fig. 3) von etwa 168 mm und einen kleinsten Außendurchmesser d2 von etwa 82 mm. Bei Anschluß an andere Anschlußstutzen 1, z.B. mit dem Außenmaß 1oo mm, sind die entsprechenden Maß proportional verändert.

Das Kunststoffrohr 20 hat zwei derartige innenliegende glatte Bereiche 22 u. zwei entsprechend gestaltete Endstücke 24, welche in ihre Konfiguration den glatten Bereichen 22 entsprechen mit der Ausnahme, daß sie längs des in Fig. 3 dargestellten Querschnitts Rastnasen 26 aufweisen. Deren Zentren haben einen Abstand von etwa 12 mm vom jeweiligen Rohrende. Sie sind als lediglich nach außen gewölbte Ausbeulungen mit halbzylindrischen Querschnitt (Fig. 4) und Erstreckung längs des Rohrumfang gestaltet. Sie haben dabei von Fußpunkt zu Fußpunkt etwa ine Erstreckungslänge längs Umfang von ca. 20 mm und ein breite von ca. 7,5 mm. In jedem Quartal des Rohrquerschni ist je eine derartige Rastnase angeordnet, und zwar etwa zur Schmalseite versetzt. Die Konturen 28a und 28b an der beiden Enden der langgestreckten Rastnasen verlaufen dabe eweils etwa parallel zur kleinen bzw. großen Achse des Rohr schnitts.

Zwischen den E ücken 24 und dem jeweils benachbarten der beiden innenliegenden glatten Bereiche 22, die bis auf die Rastnasen 26 nach Wandstärke, Konfiguration und Materialeigenschaften
vollkommen identisch sind und axial miteinander fluchten, liegen
jeweils sich ausschließlich nach außen auswölbende Versteifungssicken 30 jeweils mit einer Höhe über Umfang von ca. 5,5 mm.
Die drei Versteifungssicken 30 sind jeweils äquidistant angeordnet, derart, daß der Abstand zwischen ihren Zentren einerseits und andererseits der Abstand zwischen einer außenliegenden Sicke 30 und dem benachbarten Ende des Kunststoffrohres 20
jeweils ca. 200 mm beträgt, was eine Gesamtlänge des Kunststoffrohres 20 von ca. 800 (± 10) mm ergibt. Jede Sicke 30 besteht
aus drei ausschließlich nach außen vorstehenden Faltungen 32 der
Rohrwand mit einer radialen Höhe über Außenumfang des Rohres von
ca. 5,5 mm, wobei aufgrund der Blasformherstellung die Wandstärke
in jeder Faltung bis auf 0,2 mm absinken kann. Es hat sich gezeigt, daß zwei Faltungen ungünstiger als drei Faltungen sind,
während vier oder fünf Faltungen zwar möglich sind, jedoch bereits wieder zu viel Material benötigen, um einerseits die sickenartige Versteifungsfunktion, andererseits noch eine gewisse Gelenkwirkung im Bereich der Sicke sicherzustellen. Die Sicken stellen sicher, daß Rohrwandungsstücke der glatten Bereiche 22 oder
der Endstücke, die etwa durch Druckausübung eingebeult werden,
sich von selbst wieder in die Konfiguration der Vorfertigung zurückbegeben, wenn auch manchmal erst nach gewisser Zeit in Abhägigkeit vom Ausbeulungsgrad. Der Scheitelabstand zweier Faltungen der Sicke beträgt ca 5 mm. Dasselbe gilt sinngemäß
für die Längserstreckung einer Faltung. Man erkennt, daß die
Faltungen sowohl an den Maxima als auch an den Minima gerundete
Kontur haben, um bei elastischer Beanspruchung Reißerscheinungen

oder Brüche zu vermeiden. Die Minima der Faltungen fluchten mit der Rohrwandung, um Einschnürungen des Strömungsquerschnitts im gefalteten Bereich auszuschließen.

Ein längs der anderen Küchenwand verlaufendes Kunststoffrohr 34 weist ein Endstück 24 und zwei glatte Bereiche 22 sowie zwei Versteifungssicken 30 auf, die insoweit den entsprechenden Teilen des Kunststoffrohres 20 identisch entsprechen. Dabei ist das eine Endstück 24 des Kunststoffrohres 20 mit dem Endstück 24 des Kunststoffrohres 34 über Rohrverbinder 18 der nach Bau- und Montageart beschriebenen Art durch einen zweiten Faltenbalg 36 verbunden, der hier nur als Rohrkrümmer mit horizontaler statt, wie im bisher beschriebenen Fall, vertikaler Krümmungsebene ohne Übergang in einen anderen Anschlußquerschnitt wirkt und nach seiner Bau- und Montageart dem bereits beschriebenen Faltenbalg 16 entspricht.

Der einzige Unterschied des Kunststoffrohres 34 gegenüber dem Kunststoffrohr 20 besteht darin, daß sein anderer Endabschnitt 38 selbst als vielfaltiger Faltenbalg ausgebildet ist, der im dargestellten Ausführungsbeispiel eine Krümmung zunächst in einer Horizontalebene in eine Wanddurchbrechung 40 in einen Luftschacht hinein und innerhalb dieses Luftschachtes eine weitere 90°-Krümmung in einer vertikalen Ebene ermöglicht, so daß das Rohrende 42 in Richtung der Pfeile 44 vertikal nach oben gerichtet ist. Die Ausbildung und Anordnung der Faltungen des Endabschnittes 38 entsprechen dabei der der Versteifungssicken 30, jedoch mit der Ausnahme, daß eine Vielzahl von Faltungen 32 vorgesehen ist. Wegen der etwa zweimaligen

$90^o$-Krümmung und der einzurechnenden Wandstärke können dabei beispielsweise zwischen 50 und 100 Falten vorgesehen sein. Ausnahmsweise kann eine solche große Zahl von Faltungen auch an einem Kunststoffrohr der Erfindung vorhanden sein, wenn durch die Anbringung in der Durchbrechung von außen her durch die Montageweise Formsteifigkeit sichergestellt ist. Der an sich nicht selbsttragende, in den Luftschacht ragende Endbereich angrenzend an das Rohrende 42 bis in einen in eine im Bereich der Wandstärke liegende Zone wird zweckmäßig durch ein Einsatzstück versteift, wie es in Fig. 1a dargestellt ist. Dieses Einsatzstück ist hier eine um $90^o$ gekrümmte U-Schiene 46 mit durchweg rechteckigem Querschnitt. Stattdessen kann man auch einen Einsatz in Gestalt einer sich ein- oder beidseitig an die Innenkontur des Rohres anschmiegenden Form wählen.

Das Kunststoffrohr 34 veranschaulicht eine Möglichkeit der Erfindung, wenigstens teilweise, im Grenzfall auch völlig, gesondert gefertigte Faltenbälge 16 bzw. 36 entbehrlich zu machen. Das Rohrende 42 erfüllt dabei bereits beispielsweise die Funktion, die auch der Faltenbalg 36 übernehmen kann, nämlich eine Krümmerfunktion, im Falle des Endabschnittes 38 - ohne Beschränkung der Allgemeinheit der Lehre der Erfindung auch hinsichtlich einfacher oder gar dreifacher Krümmungen - speziell mit zweifacher Krümmung in zwei verschiedenen Krümmungsebenen.

Ebenso kann ein Kunststoffrohr gemäß der Erfindung, sei es nur das Kunststoffrohr 24 oder das Kunststoffrohr 34 oder das noch weiter hinten beschriebene Kunststoffrohr 82, auch die

BAD ORIGINAL

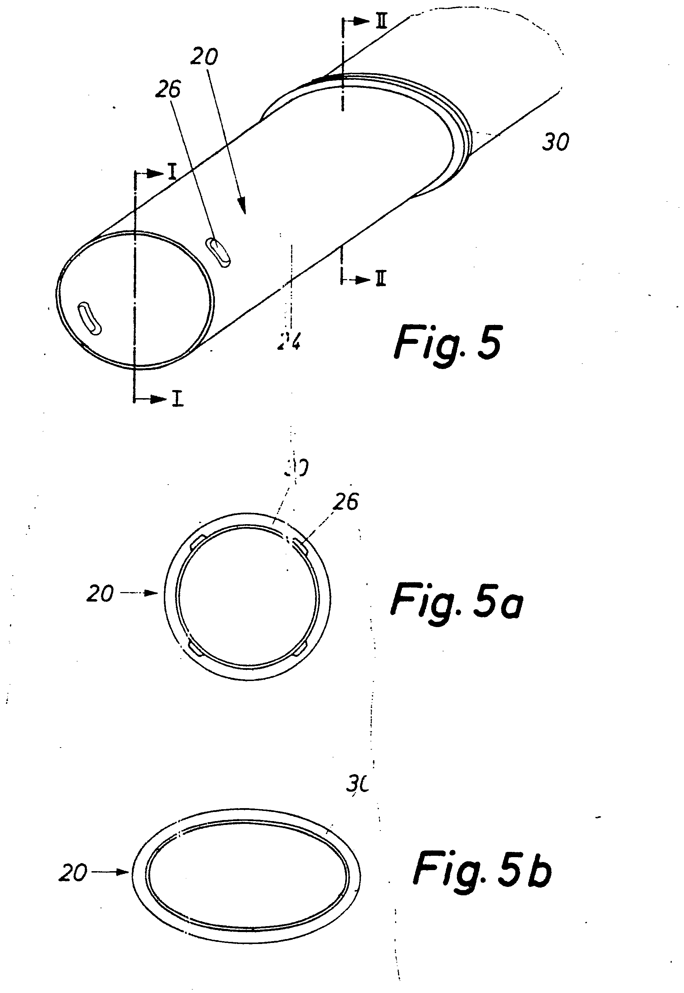

Funktion eines Übergangsstückes übernehmen, wie es anhand der Fig. 5, 5a und 5b am Beispiel des Kunststoffrohres 20 ohne Beschränkung der Allgemeinheit veranschaulicht ist.

Fig. 5b zeigt den normalen ovalen Querschnitt des Kunststoffrohres. Fig. 5a veranschaulicht demgegenüber, daß das analog Fig. 5b vorgefertigte Endstück 24 auch beispielsweise in einen zylindrischen Anschlußquerschnitt durch Ausübung beispielsweise von Zug und/oder Druck auf die Wandung, was sogar manuell erfolgen kann, verformbar ist. Analog ist eine Verformbarkeit beispielsweise in einen rechteckigen oder gar quadratischen Querschnitt möglich oder eine entsprechende Verformung aus einer anderen als ovalen Ausgangskonfiguration in eine davon wiederum wesentlich unterschiedliche.

Entsprechende Verformungen sind auch an den glatten Bereichen 22 des Kunststoffrohres 20 möglich, wenn man dieses dort auseinanderschneidet und beispielsweise die Entlüftungsleitung 2 aus Teilstücken des Kunststoffrohrs 20 zusammensetzt.

Diese Verformbarkeit ermöglicht es bei geeigneter Orientierung eines Anschlußstutzens der Art des Anschlußstutzens 12, von dessen z.B. zylindrischem Anschlußquerschnitt auf z.B. den geschilderten ovalen Querschnitt ohne Verwendung eines gesonderten Übergangsstücks, wie des Faltenbalges 16, überzugehen, indem das Kunststoffrohr 24, oder ein anderes Kunststoffrohr gemäß der Erfindung, unter Verformung seines vorgefertigten Anschlußendes in den unterschiedlichen Anschlußquerschnitt unmittelbar angeschlossen wird, sei es unter direktem Auf- oder Einschieben, sei es unter Verwendung eines Rohrverbinders nach Art des Rohrverbinders 18.

Ein solcher Rohrverbinder 18 wird nachfolgend mit einem elliptisch-ovalen Anschlußquerschnitt analog dem vorgefertigten Querschnitt des Kunststoffrohres 20 bzw. 34 beschrieben. Es versteht sich allerdings, daß ein solcher Rohrverbinder auch beispielsweise zylindrischen Anschlußquerschnitt haben kann, wenn er dazu dienen soll, einen etwa nach Fig. 5a verformten Endbereich eines Kunststoffrohres in seinem verformten Zustand zu halten.

Die glatten Bereiche 22 und die Endstücke 24 sind bis auf ihre geschilderte Querschnittsverformbarkeit biegesteif. Insbesondere neigen sie eher zum Ausknicken als zur Änderung ihrer Fluchtungslinie. Biegebeanspruchungen werden vielmehr von den gefalteten Zwischen- oder Endbereichen eines Kunststoffrohres der geschilderten Art aufgenommen. Der Endabschnitt 42 des Kunststoffrohres 24 ist seiner Verformbarkeit nach dabei den Endstücken 24 am anderen Ende des Kunststoffrohres 34 oder am Kunststoffrohr 20 verwandt. Die axiale Erstreckung ist jedoch demgegenüber klein und die Hauptverformung erfolgt dort in den gefalteten Bereichen. Es ist jedoch grundsätzlich möglich, bei einem Kunststoffrohr nach Art des Kunststoffrohres 34, bei dem sowohl als Versteifungssicken 30 dienende als auch als Rohrkrümmer dienende Faltungen vorgesehen sind, auch ein an einem gefalteten Endabschnitt 38 vorhandenes Rohrende analog wie die Endstücke 24 in einen unterschiedlichen Anschlußquerschnitt durch Zug- und Druckausübung umzuformen.

Beim Einsetzen der U-Schiene 46 oder einer anderen Innenversteifung eines als flexibler Faltenbalg ausgebildeten Kunststoffrohrendes kann man übrigens auch dessen Querschnittsverformbarkeit im Bedarfsfall sinnvoll nutzen.

Der in den Fig. 6 bis 8 dargestellte Rohrverbinder 18 weist eine im wesentlichen, z.B. bis auf Angußansätze, innen und außen glatte Haltemuffe 48 auf. Obwohl diese aus demselben Material wie die anzuschließenden Kunststoffrohre besteht, hat sie aufgrund wesentlich größerer Wandstärke, beispielsweise des konventionellen Kunststoffrohrmaßes für Entlüftungsleitungen von ca. 2 mm, nicht nur Biegesteifigkeit, sondern auch querschnittsmäßige, mindestens relative Formstabilität. Um den Innenquerschnitt der Entlüftungsleitung 2 nicht einzuengen, ist dabei die Haltemuffe 48 als Überschubmuffe ausgebildet, deren Innenkontur der Außenkontur den anzuschließenden Enden von Kunststoffrohren entspricht. Im dargestellten Beispiel ist die Innenkontur ebenso elliptisch-oval wie die Außenkontur der Endstücke 24 des Kunststoffrohres 20 oder des entsprechenden Endstücks am Kunststoffrohr 34. Wenn die Haltemuffe jedoch dazu dienen soll, einen gegenüber dem vorgefertigten Anschlußquerschnitt eines Kunststoffrohres unterschiedlich, insbesondere deutlich unterschiedlich, geformten Anschlußquerschnitt eines entsprechend verformten Rohrendes zu halten, hat der Rohrverbinder dann entsprechend die andere geänderte Anschlußkontur, z.B. eine zylindrische gemäß Fig. 5a, was hier jedoch im einzelnen nicht gesondert dargestellt ist.

Die Haltemuffe hat beispielsweise eine Längserstreckung über alles von 83 mm. Dabei kann in beide Enden der Haltemuffe 48 je ein Ende eines Kunststoffrohres eingesteckt werden, um beide Kunststoffrohre miteinander zu verbinden.

Bei konventionellem Eingriff können dabei die Rastnasen 26 eines Kunststoffrohres (z.B. an 20 oder 34) in an gegenüberliegenden Orten angeordneten und sich längs des Umfangs erstreckenden Langlöchern 5o einrasten, deren Zentren etwa einen Abstand von 2o mm vom jeweils freien Ende der Haltemuffe 48 haben und die sich mit einer Breite von ca. 9 mm jeweils etwa 22 mm weit längs des Umfangs der Haltemuffe erstrecken und an ihren Enden halbkreisförmig gerundet sind.

An die Stelle der Langlöcher können natürlich auch entsprechende Rastmulden 50a treten, wie sie schematisch in Fig. 9 dargestellt sind. In der linken Seite von Fig. 9 ist der Einrastungszustand von an den Rohrenden vorgesehenen Rastnasen 26 in den entsprechenden Langlöchern 5o bzw. Rastmulden 50a dargestellt. Bei üblichem Anschluß vorgefertigter Rohrenden ist dabei die Anschlußweise auf beiden Seiten der Haltemuffe 48 so, wie es in Fig. 9 nur an der linken Seite der Haltemuffe 48 dargestellt ist.

Auf halber Länge ist die Haltemuffe 48 mit einer innen umlaufenden Ringrippe 52 ausgebildet, die sich radial innen zu in einen beidseitig ausladenden Halteflansch 54 mit einer Ausladungsweite von ca. 15 mm verbreitert. Die Gestaltung ist da-

dabei symmetrisch zur mittleren Querschnittsebene der Haltemuffe 48. Die den Innenquerschnitt der Rohrleitung beschränkende Innenfläche 56 des Halteflansches kann dabei, wie dargestellt, nach Art eines flachen Kreisbogens gerundet sein. Sie kann aber auch einfach parallel zur Achse der Haltemuffe 48 deren Innenkontur folgen. Wesentlich ist, daß sich der Spalt zwischen der Innenkontur der Haltemuffe 48 und der dieser zugewandten Fläche 58 in Richtung zur Ringrippe 52 konisch verjüngt. Dadurch ist es möglich, wie dies in Fig. 9 dargestellt ist, ein Ende 60 eines Kunststoffrohres, welches nicht mit Rastnasen 26 versehen ist, in den sich konisch verjüngenden Ringspalt 62 bis in beiderseitigen Anschlag einerseits an der Fläche 58 und andererseits an der Innenkontur der Haltemuffe 48 einzuschieben und so beidseitig abgestützt zu halten. Die Langlöcher 5o bzw. Rastmulden 5oa und der Ringspalt 62 sind dabei also alternativ wirksam werdende Haltemittel für verschieden gestaltete Rohrenden. Ein außen und innen glattes Rohrende kann beispielsweise durch Zuschneiden eines entsprechenden Kunststoffrohres aus dem Kunststoffrohr 2o gewonnen werden, indem man den Schnitt längs eines innenliegenden glatten Bereiches 22 führt, dessen an den Schnitt angrenzender Bereich dann zu dem Rohrende 60 des zugeschnittenen Rohrstücks wird.

Wie aus Fig. 9 ersichtlich wird, ist dabei der Ringspalt 62 und der diesen bildende Halteflansch 54 so weit nach innen gegenüber der freien Öffnung der Haltemuffe 48 zurückgesetzt, daß ein normal mit einer Rastnase 26 in eine Rastmulde 5oa oder ein Langloch 5o einrastendes Endstück 24 noch mit Abstand vom Halteflansch 54 endet und trotzdem in der Haltemuffe 48 hin-

BAD ORIGINAL

reichend lange Haltelänge findet.

Es versteht sich, daß der Halteflansch 54 mitsamt tragender Ringrippe 52 gegebenenfalls auch in Umfangssegmente aufgeteilt sein kann.

Die Haltemuffe 48 wird außenseitig von einem Sockelteil 64 getragen, das sich symmetrisch zur Mittelquerebene der Haltemuffe 48 über eine Länge von ca. 25 mm erstreckt und ein Profilteil ist, welches aus je einem zur Quermittelebene der Haltemuffe 48 parallelen äußeren Wandteil 66 bzw. 68 gebildet ist, die außenseitig jeweils durch eine vertikale Seitenwand 7o abgeschlossen sind. Diese mündet jeweils am Ende des großen Durchmessers der Haltemuffe 48 absatzlos. Am unteren Ende der beiden sich bis zu einem ebenen Aufsatzrand 72 erstreckenden Wandteile 66 und 68 ist jeweils ein nach außen ausladender etwa dreieckförmiger Ansatz 74 der Seitenwand 66 oder 68 vorgesehen. Zwischen den beiden Ansätzen 74 erstreckt sich, ausgehend von der Ebene des Aufsatzrandes 72 nach oben, jeweils eine Verbindungswand 76 mit einem sich längs der Haltemuffe 48 außerhalb von dieser erstreckenden Langloch 78 mit angerundeten Enden. Die beiden Langlöcher 78 dienen zur Aufnahme von Schrauben zur Befestigung des Rohrverbinders 18 beispielsweise auf der Oberseite 8 von Hängeschränken 6, wie dies anhand von Fig. 1 dargestellt ist. Die Ansätze 74 nebst Verbindungswänden 76 sind gegebenenfalls wegbrechbar oder abschneidbar. Auch wenn die Haltemuffe 48 sich nicht ganz bis zum Aufsatzrand 72 herab erstreckt,können längs der Achse der Haltemuffe noch Stützansätze 8o an der Unterseite der Haltemuffe angeformt sein, wie dies in Fig. 6 angedeutet ist.

Bereits mit den beschriebenen Elementen läßt sich eine Be- oder Entlüftungsleitung gemäß der Erfindung vollständig aufbauen. Es zeigt sich dabei, daß die sich nur nach außen gegenüber dem freien Rohrquerschnitt verlaufenden Faltungen 32, seien diese nun bei Sicken nur in geringer Anzahl oder in anderen Bereichen, z.B. an Verbindungsstücken 16 oder 36 oder Endstücken 32 in größerer Anzahl vorhanden, trotz der Strömungstoträume zu keiner nennenswerten Behinderung der Luftströmung führen, während im Gegenteil selbst bei Querschnittsveränderungen im Verlauf der Rohrleitung und gekrümmten Stücken die Gleichförmigkeit der Richtungsänderung sogar zu einem geringeren Luftwiderstand führt als bei Verlegung konventioneller Wasserrohrleitungen als Luftleitungen, die man bisher immer als Obergrenze der bei vergleichbaren Luftleitungen erreichbaren Strömungsverhältnisse betrachtet hatte. Auch die Rohrverbinder 18 mit ihren praktisch die Strömung kaum behindernden Halteflanschen 54 beeinträchtigen dieses Bild nicht merklich.

Anstatt, wie im Falle des Kunststoffrohres 2o oder des einen Anteils des Kunststoffrohres 34 mit Ausnahme seines Endabschnitts 38, überwiegend aus glatten Bereichen zu bestehen, die höchstens geringfügig, z.B. in Gestalt der Rastnasen 26 im Falle der Endstücke 24, profiliert sind, kann ein Kunststoffrohr gemäß der Erfindung auch über mehr als die Hälfte seiner Länge mit Faltungen 32 der schon früher beschriebenen Art versehen sein, wie Fig. 11a und 11b in Verbindung mit Fig. 1o anhand eines solchen Kunststoffrohres 82 zeigen, das an seinem einen Ende einen starren Tragrahmen 84 aufweist, in welchen eine Klappjalousie eingebaut werden kann.

Das Kunststoffrohr 82 hat zunächst ein dem Endstück 24 des Kunststoffrohres entsprechendes Endstück 86, das jedoch vorzugsweise eine geringere axiale Länge von zweckmäßig etwa 4o mm hat. Dieses Endstück 86 ist auch mit Rastnasen 26 der schon früher beschriebenen Art versehen, welche in Langlöcher 5o bzw. Rastmulden 5oa entsprechender Rohrverbinder 18 einrasten können.

An das Endstück 86 schließt ein erster Faltenbalg 88 mit vorzugsweise zwanzig Faltungen 32 der früher beschriebenen Art an. Dieser Faltenbalg hat eine solche Länge, daß eine merkliche Winkeländerung des Kunststoffrohres im Bereich des Faltenbalges 88 möglich ist, bei extremer Materialdehnung sogar eine von 90°, im allgemeinen eine geringere Winkeländerung.

Auf den ersten Faltenbalg 88, der sich über ca. 100 mm erstreckt, folgt ein erster innen und außen glatter Rohrabschnitt 9o entsprechend dem glatten Bereich 22 des Kunststoffrohres 2o, jedoch mit einer axialen Länge von ca. 50 cm. Hierauf folgt ein zweiter Faltenbalg 92, vorzugsweise mit einer axialen Erstreckung von ca. 150 mm und ca. 30 Faltungen 32. Dieser Faltenbalg ist mühelos um mindestens 90° abbiegbar. An diesen schließt wiederum ein zweiter innen und außen glatter Rohrabschnitt mit etwas größerer axialer Länge als der Rohrabschnitt 90, nämlich von ca. 50 mm axialer Länge, an, auf den ein dritter Faltenbalg 96 folgt, der wiederum eine kleinere Faltenzahl von ca. 10 Falten hat, die sich vorzugsweise über ca. 80 mm erstrecken.

Hieran schließt wiederum ein weiterer innen und außen glatter Rohrabschnitt 98 mit einer Länge von zweckmäßig ca. 45 mm an, aus dem sich jedoch gemäß der Darstellung in Fig. 12 sechs über den Umfang verteilte etwa pyramidenförmige Ausbauchungen als Greifnasen 100 erheben.

Wie Fig. 12 zeigt, hat das Kunststoffrohr 82 dieselbe etwa elliptisch ovale Form wie das Kunststoffrohr 20 oder 34 mit Spiegelsymmetrie zu beiden Hauptachsen, wie bei den genannten früher beschriebenen Kunststoffrohren.

Dabei ist je eine Greifnase in der Mitte jeder flacheren Umfangsseite jedes Rohres im Bereich des kleinen Rohrdurchmessers angeordnet und an dieser flachen Seite jeweils leicht versetzt zur Schmalseite je eine Greifnase etwa in der Mitte jedes Quadranten angeordnet. Jede Greifnase hat dabei eine geradlinig aufsteigend Flanke 102 an der dem Endstück 86 zugewandten Seite und eine nach oben widerhakenförmig konkav gekrümmte Flanke 104 an der gegenüberliegenden Seite. Die in der Flanke 102 mündenden beiden Schenkel 104 schließen dabei einen Winkel von ca. 80° miteinander ein, während die Spitze der Greifnase leicht mit einem Winkel von ca. 2,5 mm gerundet ist und auf der widerhakenförmig gekrümmten Seite 102 dabei mit einem Radius von 11 mm in die normale Seitenwandkontur des Rohres übergeht, während die Flanke 102 in einem Winkel von 20° von der Pyramidenspitze aus abfällt, bezogen auf eine Parallele zur Rohrachse. Die Greifnasen 100 erheben sich um ca. 11 mm aus der Rohrwand und ragen damit weiter hervor als die nur um ca. 5,5 mm hervorragenden Faltungen 32. Die Greifnasen erstrecken sich dabei praktisch über die ganze Länge des Rohrabschnitts 98.

In Umfangsrichtung zwischen den Greifnasen ist jeweils mehr glatte Länge des Rohrabschnittes 98 frei, als sich die Greifnasen in dieser Umfangsrichtung erstrecken.

Man erkennt, daß die Greifnasen 100 ebenso wie die Rastnasen 26 von nach außen ausgebeulten verlaufenden Wandbereichen gebildet sind, die im Blasverfahren aus dem Vorformling durch entsprechendes Eindrücken in Ausnehmungen der Form mitgeformt sind.

Anschließend an den Rohrabschnitt 98 folgt ein vierter Faltenbalg 106, der zweckmäßig eine Länge von ca. 62,5 mm mit ca. 10 Falten hat und insbesondere als axiales Federelement dient.

Demselben Zweck kann auch noch der Faltenbalg 96 bedarfsweise dienen.

Auf den Faltenbalg 106 folgt ein querschnittsveränderndes und sich in der Wandstärke allmählich verstärkendes Übergangsstück 110, welches einen Übergang von dem sonst ovalen Rohrquerschnitt in eine innen und außen etwa rechteckige Kontur bewirkt, die innen eine größere Weite als der lichte Durchmesser des ovalen Rohres hat und außen vorzugsweise dem umschriebenen Rechteck um die Faltungen 32 entspricht, gegebenenfalls in der dargestellten Weise auch noch eine geringfügige Überweite hat, die jedoch deutlich geringer als die Ausladung der Greifnasen 100 sein soll. An seinem weitesten Bereich biegt das innen und außen glatt ausgebildete Übergangsstück 110 in eine radiale Ringschulter 112 nach außen ab, an die ein an den Ecken gerundeter rechteckiger Abschnitt 114 folgt. Dieser ist an seiner Unterseite mit einer gerundeten Einbuchtung 116 versehen und verläuft sonst achsparallel und ist an seinem Ende in einer radial einwärts gerichteten stirnseitigen Ringscheibe 118 mit an den Ecken gerundeten Rechteckkanten fortgesetzt, die an ihrem radial inneren Ende wieder axial etwa über die halbe Länge des Abschnittes 114 in einen axial verlaufenden etwa rechteckigen Abschnitt 120 zurückspringt. Die zu einem rechteckartig ringförmig weitgehend geschlossenen Ringprofil geformten Wandabschnitte 112 bis 120 bilden dabei im ganzen einen Tragrahmen 122, der gegebenenfalls noch gemäß Fig. 17 durch einen an den Abschnitt 120 anschließenden weiteren radial verlaufenden Ringscheibenabschnitt 124 etwa halber bis viertel radialer Erstreckungslänge des Abschnittes 118 nach innen fortgesetzt und wiederum seinerseits von einem axial nach innen verlaufenden Wandabschnitt 126 fortgesetzt sein kann.

Unten an dem Abschnitt 114 zwischen der rinnenförmigen Einbuchtung 116 und der stirnseitigen radial verlaufenden Kreisscheibe 118 ist dabei ein vertikal nach unten weisender Wulst 128 in der Wand ausgebildet, der als Regenabtropfkante dient.

Das Kunststoffrohr 82 hat eine Länge über alles (von der Fläche 118 bis zu dem offenen Ende des Endstücks 86) von ca. 608 $\pm$ 10 mm. Diese Länge dient dazu, die verschiedenen Einbaumöglichkeiten gemäß den Fig. 13 bis 16f zu ermöglichen. Bei allen diesen Figuren wird davon ausgegangen, daß in den Tragrahmen eine Lamellenjalousie mit Klapplamellen eingebaut ist, die später noch im einzelnen anhand verschiedener Modifikationen beschrieben wird.

Der Einbau des Kunststoffrohres 82 erfolgt dabei so, daß das Kunststoffrohr von außen durch eine Durchbrechung 13o einer Außenmauer 132 eines Gebäudes so hindurchgesteckt wird, daß die Ringschulter 112 an der Außenseite der Mauer 132 anstößt. Die Klappjalousie 134 öffnet dabei ins Freie und ist in den Fig. 13 bis 16f in weit geöffneter Stellung gezeichnet.

In den Fig. 13 bis 15 wird zunächst von einer konstanten Stärke der Mauer 132 ausgegangen, welche die beiden Faltenbälge 96

und 1o6 aufnimmt. Beim Einziehen des Kunststoffrohrs 82 in die Mauerdurchbrechung 13o dient dabei der Faltenbalg 1o6 als axiales Federelement, welches auf die in den Fig. 13 bis 16f der Einfachheit halber nicht im einzelnen eingezeichnete Greifnasen eine Vorspannkraft ausüben, so daß sich deren widerhakenförmige Seite 1o4 in das Mauerwerk einzugraben trachtet.

Die Fig. 13 bis 15 unterscheiden sich in verschiedener Anschlußweise eines unmittelbar an der Innenseite der Mauer 132 angeschlossenen Gerätes.

Bei der Anordnung nach Fig. 13 hat das Gerät, beispielsweise eine Dunstabzugshaube, einen nach oben weisenden zylindrischen Anschlußstutzen 136. Auf diesen ist das Endstück 86 unter entsprechender Änderung seines Anschlußquerschnittes von ovaler in zylindrische Form aufgesteckt. Als Krümmer dient dabei der benachbarte Faltenbalg 88, der hier bis um 90° gebeugt ist. Der Faltenbalg 92 und in gewissem Ausmaß auch der ebenfalls noch federnd wirkende Faltenbalg 96 dienen dabei als axiale Ausgleichsstücke.

Während in Fig. 13 der zylindrische Anschlußstutzen 86 fast bis in die untere Fluchtungslinie der Mauerdurchbrechung 13o ragt, ist der entsprechende Anschlußstutzen 138 in Fig. 14, wiederum einer hier anders gestalteten Dunstabzugshaube, gegenüber der Mauerdurchbrechung weiter nach unten versetzt, jedoch weiterhin vertikal nach oben ragend. In diesem Falle erfolgt der Anschluß des Endstücks 86 unter Verformung auf den zylindrischen Anschlußquerschnitt analog. Hier dient

dach der Faltenbalg 88 als axiales Ausgleichsstück und der Faltenbalg 82 als 90°-Rohrkrümmer. Der Zahl seiner Falten nach ist dies die Hauptfunktion des Faltenbalgs 94, während der Falterbalg 88 im allgemeinen zur Krümmung um weniger als 90°, jedoch noch um große Krümmungswinkel, gedacht ist. Entsprechendes gilt auch für die dritten und vierten Faltenbälge 96 und 98, die nur in Sonderfällen um 90° abgewinkelt werden, nämlich dann, wenn wenig normgerechte, insbesondere sehr geringe Wandstärken, von Außenwänden vorgesehen sind (vgl. Fig. 16a und 16b).

Man kann natürlich aber auch ein Kunststoffrohr 82 mit anderen Längenbemessungen der einzelnen gefalteten Abschnitte in Anpassung an unterschiedliche Anwendungszwecke vorsehen, ohne nur mit einer zu geringen Faltenzahl versehene Abschnitte übermäßig zu beanspruchen oder mit hoher Faltenzahl versehene Abschnitte nicht voll auszunutzen.

Gemäß Fig. 15 ist ein dritter, wiederum zylindrischer Anschlußstutzen 140 mit Abstand gegenüber der Mauerdurchbrechung nach oben gegenüber dieser versetzt parallel zur Mauerdurchbrechung angeordnet. In diesem Fall wird wie im Falle der Fig. 13 und 14 wiederum der oval vorgefertigte Querschnitt des Endstücks 86 des Kunststoffrohrs 82 in den zylindrischen Anschlußquerschnitt verformt. Die Änderung der Liegerichtung des Kunststoffrohrs 82 erfolgt hierbei S-förmig sowohl im ersten Faltenbalg 88 als auch im zweiten Faltenbalg 92, wobei beide Faltenbälge, insbesondere der Faltenbalg 92, hierbei zugleich noch als axiale Längenausdehnungselemente dienen. Das Gerät kann hierbei wiederum eine Dunstabzughaube in erneut unterschiedlicher Gestaltungsweise sein, z.B. unmittelbar über einem zeichnerisch dargestellten Gerät, z.B. einem Wäschetrockner.

Es versteht sich, daß eine doppelte Biegung von unterschiedlichen Faltenbälgen 88 und 92 und gegebenenfalls anderen auch in mehr als einer Biegeebene stattfinden kann, so daß beispielsweise in nicht dargestellter Art auch ein Anschlußstutzen eine beispielsweise horizontal parallel mit der Mauer 132 verlaufende Ausrichtung haben könnte.

Die Fig. 16a bis 16f zeigen den Einbau des Kunststoffrohres 82 für Einbaufälle, die denen der Fig. 13 oder 14 entsprechen, jedoch bei unterschiedlicher Mauerwandstärke. Beispielsweise sei in Fig. 16a eine Mauerwandstärke a = 8 cm, in Fig. 16b eine Mauerwandstärke b = ca. 15 cm, in Fig. 16c eine Mauerwandstärke c = 27 cm, in Fig. 16d eine Mauerwandstärke d = ca. 33 cm, in Fig. 16e eine Mauerwandstärke e = ca. 39 cm und Fig. 16f eine Mauerwandstärke f = ca. 58 cm vorgesehen.

Die Figuren zeigen, daß dabei naturgemäß das Kunststoffrohr 82 eine verschieden lange Erstreckung durch die Mauerdurchbrechung hat, so daß die jeweils unmittelbar an der Innenseite der Mauer 132 erfolgende 90°-Abbiegung in unterschiedlichen Faltenbälgen erfolgt, z.B. bei der besonders dünnen Wand bereits in dem dem Tragrahmen 122 nächstkommenden Faltenbalg 1o6, bei der nächststärkeren Wandstärke im nachfolgenden Faltenbalg 96, bei den nächsten drei Wandstärken der Fig. 16c, 16d und 16e in dem hauptsächlich für diesen Zweck vorgesehenen Faltenbalg 92, wobei dieser so viel gefaltete Überlänge hat, daß noch gemäß Fig. 16d eine kleine Teillänge oder Fig. 16e sogar bis zur Hälfte der Länge in der Mauerdurchbrechung angeordnet sein können. Bei extrem dickem Mauerwerk kann schließlich die 90°-Abbiegung analog zu Fig. 13 erst in dem dem Endstück 86 nächsten Faltenbalg 88 erfolgen.

Die Gesamtlänge des Kunststoffrohres 82 ist demnach so bemessen, daß gerade alle in der Praxis vorkommenden Mauerwandstärken erfaßt und nicht nur Klappjalousie und das anschließende Fortsetzungsrohr, sondern auch noch mindestens ein anschließender Rohrkrümmer an dem einteiligen Kunststoffrohr 82 funktionell verwirklicht werden können.

Alle im Rahmen der Erfindung betrachteten Kunststoffrohre 2o, 34 und 82 sind alle ursprünglich mit koaxialer Ausrichtung aller ihrer genannten Abschnitte, also als gerade Rohre, vorgefertigt. Dies schließt jedoch nicht aus, daß auch Kunststoffrohre gemäß der Erfindung von vornherein ganz oder teilweise gekrümmt vorgefertigt werden können.

Nachfolgend sei der Einbau der Klappjalousie 134 im Tragrahmen 122 im einzelnen betrachtet:

Im Zusammenhang mit Fig. 17 wurden die Teile des Fußstückes des Blasformstückes beschrieben, welche den Tragrahmen bilden.

Es wird dabei im allgemeinen der stirnseitige Teil 142 des Blasformstücks, der an dem axial inneren Ende des Wandabschnitts 126 anschließt und das Fußstück des Blasformstücks bei der Herstellung stirnseitig schließt, herausgeschnitten, herausgestanzt oder auf andere Weise entfernt. Dieser stirnseitige Teil 142 besteht aus einem äußeren Ringflansch 144, der von dem Wandabschnitt 126 radial innen anschließend in einer Radialebene verläuft, einem sich axial nach außen fortsetzendem Zylinder 146, der deutlich über die stirnseitige Ringscheibe 118 hinausragt, und einer stirnseitigen Abschlußscheibe 148. Diese sind bei der Herstellung des Kunststoffrohres 82 Abfall.

Die geschlossene Stirnseite des geschlossenen Fußstücks des Blasformstücks zeigt Fig. 17a. Dort sind auch die Radien $r_1$, $r_2$ und $r_3$ in den vier Ecken des Profils eingezeichnet, die so bemessen sind, daß alle dargestellten ringförmigen Zonen 144, 124 und 118 auch in den Eckbereichen ebenso wie in den anderen Bereichen konstante Weite haben.

Fig. 17a zeigt dabei ein relativ langgestrecktes Rechteckformat des Tragrahmens 122. Die Fig. 2o, 22 und 25 zeigen demgegenüber an einem mehr einem Quadrat angenäherten Tragrahmenformat dessen Stirnansicht anhand von drei möglichen Gestaltungsvarianten, wenn der stirnseitige Teil 142 aus dem Blasformstück bereits zur Erzeugung des Endproduktes herausgetrennt ist.

In jedem Falle der dargestellten drei Varianten werden in an den Seiten des Tragrahmens 122 jeweils gegenüberliegenden Lagerstellen 150 Klapplamellen 152 eingehängt.

In den Fig. 20, 22 und 25 sind dabei nur die Achslinien der Lagerstellen 150 eingezeichnet.

Wie die Fig. 17b, 18 und 19 zeigen, werden dabei jeweils vier Klapplamellen 152 am Kopfstück 154 des Blasformstücks mit ausgebildet, aus dem das Kunststoffrohr 82 gewonnen wird. Das Kopfstück 154 wird dabei längs der Linie 156 in Fig. 17b vom Endstück 86 des Kunststoffrohres 82 abgetrennt bzw. abgeschnitten.

Wie Fig. 17b ferner zeigt, sind dabei zur Gewinnung der gewünschten Lamellenkrümmung je zwei Klapplamellen 152 bei einem in der beschriebenen Weise elliptisch-oval vorgebildeten Blasformstück an dessen Schmalseite vorgeformt. Die Fig. 18 und 19 zeigen dabei zwei alternative Gestaltungsformen der vorgeformten Klapplamellen, die dann noch jeweils für sich aus dem Kopfstück 154 des Blasformteils herausgetrennt werden müssen.

Fig. 24 zeigt eine derartige herausgetrennte Klapplamelle in nochmals variierter Gestaltung.

Alle drei dargestellten Formen von Klapplamellen stimmen in folgendem überein:

Das in sich geschlossene Lamellenblatt 158 weist zwei längs der Klapplamelle 152 verlaufende parallele sickenartig ausgewölbte (Fig. 24a) Versteifungsprofile 160 und 162 auf. Das Versteifungsprofil 160 bildet dabei zugleich die eine Längsbegrenzung des Lamellenblattes 158 (vgl. Fig. 24) und ist an seinen beiden Enden über das Lamellenblatt 158 hinaus unter Bildung von mit dem Material des Lamellenblattes integralen Lagerstummeln 164 verlängert. Die Lagerstummel haben dabei einen einseitig offenen halbzylindrischen Querschnitt (Fig. 24a).

Das zweite Versteifungsprofil 162 läuft etwa in der Mitte zwischen dem ersten Versteifungsprofil 160 und der anderen Längsbegrenzungslinie 166 des Lamellenblattes 158.

Die beiden Begrenzungen des Lamellenblattes 158 an dessen Schmalseiten werden durch ein drittes Versteifungsprofil 168 gebildet, welches das erste und das zweite Versteifungsprofil 160 und 162 mindestens in dessen Endbereichen verbindet und gegebenenfalls auch noch in mittleren Zonen des Lamellenblattes ein- oder mehrfach vorgesehen sein kann. Das dritte Versteifungsprofil 168 reicht dabei bis in den Bereich der Längsbegrenzungslinie 166.

Die beiden Ausführungsformen gemäß Fig. 18 und Fig. 19 unterscheiden sich lediglich dadurch, daß die Längsbegrenzungslinie 168 in Fig. 18 rechtwinklig zum ersten Versteifungsprofil 160 bzw. zur Längsbegrenzungslinie 166 läuft, während bei der Ausführungsform gemäß Fig. 19 ein gerundeter Übergang vorgesehen ist, wobei das dritte Versteifungsprofil jeweils noch rechtwinklig zwischen den ersten und zweiten Versteifungsprofilen 160 und 172 verläuft, dann jedoch auf einem Kreisbogen in die Längsbegrenzungslinie 166 übergeht.

Die Ausführungsform gemäß Fig. 24 entspricht insoweit der Ausführungsform gemäß Fig. 18.

Die Gestaltung im einzelnen hängt unter anderem von der Wahl des Formats des Tragrahmens 122 ab, dessen lichter Querschnitt im wesentlichen von den drei Lamellenblättern 158 überdeckbar sein soll.

Die Lagerstellen 150 für die Lagerstummel 164 der Lamellenblätter 158 können kreisförmige Bohrungen in dem ringförmigen axial verlaufenden Abschnitt 120 sein, wie dies in den Fig. 21 und 23 dargestellt ist. In diesem Fall sieht man zweckmäßig besondere Anschläge für die Lamellen zur Begrenzung ihrer beiden Klappstellungen vor.

In geschlossener Stellung der Klappjalousie 134 hängt dabei das unterste Lamellenblatt 158 vertikal und schlägt gegebenenfalls an dem Ringschulterabschnitt 124 innen an. Die beiden weiter oben eingesetzten Lamellenblätter 158 über-

0002197

lappen dabei das unterste, so daß jeweils das Versteifungs- profil 160 des nächstunteren Lamellenblattes hier den inneren Begrenzungsanschlag bilden kann. Man kann jedoch auch, wie dies in den Fig. 20 und 21 dargestellt ist, für die beiden oberen Lamellenblätter 158 innerhalb des Ringschulterabschnitts 124 selbst entsprechend der Krümmung des Profils des Lamellenblattes gekrümmte Anschlagflächen 170 ausbilden.

In diesem Fall kommt es jeweils an den beiden unteren Enden dieser beiden Anschlagflächen 170 jeweils zu Rücksprüngen 172. Diese können als Begrenzungsanschlag für das untere und das mittlere Lamellenblatt 158 dienen, damit sich dieses maximal um 90° öffnen kann. Als entsprechender Begrenzungsanschlag der Offenstellung des obersten Lamellenblattes kann hier die von dem Abschnitt 120 gebildete axial verlaufende Schulter 174 an dem oberen Verlauf des Abschnitts 120 dienen.

Statt den Ringschulterabschnitt 124 zu profilieren, kann man jedoch auch auf andere Weise Begrenzungsanschläge, insbesondere die Begrenzungsanschläge für eine etwa horizontale maximale Stellung der Lamellenblätter 158 gewinnen.

Eine besonders bevorzugte Möglichkeit zeigen Fig. 22 bis 24a. Hiernach erstrecken sich zur Gewinnung von Anschlägen für die Offenstellung des untersten und mittleren Lamellenblattes 158 von beiden Innenkanten des Wandabschnitts 126 aus kurze An- schlagzungen 15? in der vom Ringflansch 144 des stirnseitigen Teils 142 des Kopfstücks des Blasformstücks bestimmten Ebene nach innen. Diese Anschlagszungen sind dabei zweckmäßig in

BAD ORIGINAL

dem Ringflansch 144 von vornherein vorgebildet und bleiben beim Entfernen des stirnseitigen Teils 142 des Blasformstücks stehen. Sie können zusammenwirken mit zwei zu den außenseitigen dritten Versteifungsprofilen 168 parallelen und zweckmäßig etwas nach innen versetzten Anschlagstummeln 178 am Lamellenblatt selbst, die ebenso wie die Versteifungsprofile 160, 162 und 168 zweckmäßig sickenartig ausgebildet sind. Der Anschlag des obersten Lamellenblattes in Offenstellung erfolgt dabei weiterhin an der Schulter 174, während die Anschlagstummel auf die obere Flachkante je einer zugeordneten Anschlagzunge 156 aufschlagen.

Man kann aber auch auf besondere Profilierungen in dem Bereich des Tragrahmens 122 und eventuell zusätzliche Anpassungen am Lamellenblatt 158 ganz verzichten und stattdessen Grenzanschlagflächen durch entsprechende Gestaltung der Lagerstellen 150 gewinnen, wie die Fig. 25 bis 26a zeigen.

Während hier das oberste Lamellenblatt 158 weiterhin an der oberen Schulter 174 in seiner Offenstellung begrenzt ist und dementsprechend die Lagerstelle 150 hier wiederum von einer Bohrung gebildet sein kann, werden die Lagerstellen 150 für das mittlere und untere Lamellenblatt 158 besonders gestaltet, wie in der vergrößerten Ausschnittszeichnung der Fig. 26a besonders deutlich wird.

Hier ist ausnahmsweise der lichte Querschnitt der Lagerstelle 150 durch Schrägschraffur hervorgehoben, während die nicht schraffierten Bereiche geschlossene Wandbereiche, insbesondere des Abschnittes 120, sind. Berücksichtigt man, daß die Lagerstummel 164 der Lamellenblätter 158 im wesentlichen halbzylindrisches Profil haben, so kann der lichte Querschnitt der Lagerstelle 150, der hier über drei zusammenhängende Quadranten mit Aussparung des vierten Quadranten 180 verläuft, durch seine Gestaltung beide Anschläge, nämlich eine Anschlagfläche 182 für die geschlossene Stellung und eine Anschlagfläche 184 für die Offenstellung des mittleren oder untersten Lamellenblattes, bilden. Die Anschlagfläche 182 verläuft dabei in einer vertikalen Ebene, die Anschlagfläche 184 in einer Horizontalebene. Den entsprechenden lichten Querschnitt 186, welcher den Quadranten 182 komplementiert, kann man dabei beispielsweise durch Ausbrennen aus dem Abschnitt 120 gewinnen.

L 943 M1

Georg R ö h l
Lichttechnische Spezialfabrik
Apparate- und Gerätebau

D-8400 Regensburg

9. November 1978

P a t e n t a n s p r ü c h e

1.     Verfahren zum Herstellen einer Ent- oder Belüftungsleitung durch Verbinden von Rohrleitungsstücken unter Wechsel des lichten Querschnitts der Rohrleitung im Verbindungsbereich eines Rohres am selbsttragenden integralen Wandmaterial mit einem Anschlußteil durch Verformen des vorgefertigten Endes eines der mit ihren Enden zu verbindenden Rohrleitungsstücke in einen unterschiedlichen Anschlußquerschnitt, dadurch g e k e n n z e i c h n e t , daß das mit dem Anschlußteil zu verbindende Ende des Rohres in den Anschlußquerschnitt verformt wird.

2.     Verfahren nach Anspruch 1, dadurch gekennzeichnet, daß das zu verformende Ende des Rohres biegsam vorgefertigt wird.

3.     Verfahren nach Anspruch 1, dadurch gekennzeichnet, daß das zu verformende Ende des Rohres biegesteif vorgefertigt wird.

4. Verfahren nach einem der Ansprüche 1 bis 3, bei dem das in den Anschlußquerschnitt verformte Ende des einen Rohrleitungsstücks durch Zusammenstecken mit dem anderen Rohrleitungsstück verbunden wird, dadurch gekennzeichnet, daß das biegesteife Ende des Rohres durch Ausüben von Zug und/oder Druck auf seine Rohrwandung in den Anschlußquerschnitt verformt wird.

5. Verfahren nach Anspruch 3 oder 4, dadurch gekennzeichnet, daß das mit dem verformten biegesteifen Ende versehene Rohr außerdem in mindestens einem biegsam vorgefertigten Abschnitt gebogen wird.

6. Verfahren nach Anspruch 5, dadurch gekennzeichnet, daß aufeinanderfolgende Winkeländerungen gegensinnig und/oder in verschiedenen Biegeebenen vorgenommen werden.

7. Verfahren nach einem der Ansprüche 1 bis 6, dadurch gekennzeichnet, daß das in den Anschlußquerschnitt verformte Ende in seinem Verformungszustand gehalten wird.

8. Verfahren nach Anspruch 7, dadurch gekennzeichnet, daß das in den Anschlußquerschnitt verformte Ende sowohl von innen als auch von außen abgestützt wird.

9. Verfahren nach Anspruch 7 oder 8, dadurch gekennzeichnet, daß das verformte Ende des Kunststoffrohres durch vom Anschlußteil unabhängige Mittel gehalten wird.

10.    Verfahren nach einem der Ansprüche 1 bis 9, dadurch gekennzeichnet, daß das Ende des Rohres aus einem abgeflacht gerundeten Querschnitt in einen runden oder vieleckähnlichen, z.B. drei- oder rechteckigen, Querschnitt verformt wird.

11.    Verfahren nach einem der Ansprüche 1 bis 10, dadurch gekennzeichnet, daß die Leitung nur aus ein oder zwei vorgefertigten und gegebenenfalls zugeschnittenen Arten von Rohren, gegebenenfalls in Verbindung mit Rohrverbindern, Rohrkrümmern und Leitungsendstücken, hergestellt wird.

12.    Verfahren nach einem der Ansprüche 1 bis 11, dadurch gekennzeichnet, daß als Rohr ein Kunststoffrohr aus einem schwer entflammbaren Kunststoff verwendet wird, das durch Blasen vorgefertigt wird.

13.    Verfahren nach einem der Ansprüche 1 bis 11, dadurch gekennzeichnet, daß das Rohr aus einem nicht brennbaren Baustoff gemäß Baustoffklasse A1 nach DIN 4102, z.B. Al oder einer Al-Legierung, besteht.

14.    Anwendung des Verfahrens nach einem der Ansprüche 1 bis 13 auf die Herstellung einer Entlüftungsleitung eines Hausgerätes, z.B. einer Dunstabzugshaube oder eines Wschetrockners, oder eines Raumes eines bewohnten Gebäudes, z.B. eines sanitären Raumes.

15.    Anwendung des Verfahrens nach einem der Ansprüche 1

bis 13 auf die Herstellung einer Belüftungsleitung eines Hausgerätes, z.B. zur Wärmeabfuhr an einem Kühlschrank oder Herd, oder einer Raumklimatisierung.

16. Rohr aus selbsttragendem integralem Wandmaterial für eine Ent- oder Belüftungsleitung, insbesondere mit einem lichten Querschnitt, dessen Innenwandumfang gleich dem eines Rundrohres mit nicht weniger als ca. 80 und nicht mehr als ca. 150 mm Rohrdurchmesser ist, dadurch gekennzeichnet, daß mindestens ein Ende (24;86;42) des Rohres (2;34;82) derart dünnwandig aus einem flexiblen Material ausgebildet ist, daß die Wandung des Rohrendes aus dem vorgefertigten lichten Querschnitt in einen unterschiedlichen Anschlußquerschnitt drück- und/oder ziehbar ist.

17. Rohr nach Anspruch 16, dadurch gekennzeichnet, daß das Rohrende biegsam, vorzugsweise als Faltenbalg (38), ausgebildet ist.

18. Rohr nach Anspruch 17, gekennzeichnet durch einen biegesteifen Einsatz in das Rohrende (38), vorzugsweise ein gekrümmtes U-Profil (46).

19. Rohr nach einem der Ansprüche 16 bis 18, gekennzeichnet durch Ausbildung als profiliertes Blasformstück.

20. Rohr nach einem der Ansprüche 16 bis 18, gekennzeichnet durch Ausbildung als im Bandwickelverfahren hergestelltes Formstück.

21.     Rohr nach einem der Ansprüche 16 bis 20, dadurch gekennzeichnet, daß die Rohrwandung aus einem einstückigen Faltenbalg (16;36) mit homogenem Wandaufbau besteht.

22.     Rohr nach einem der Ansprüche 16 bis 20, dadurch gekennzeichnet, daß die Rohrwandung eine Folge biegesteifer (22,24; 86,90,94,98,110) und biegsamer Rohrabschnitte (30,38; 88,92,96, 106) bildet.

23.     Rohr nach Anspruch 22, dadurch gekennzeichnet, daß mindestens ein nicht am Rohrende gelegener biegsamer Abschnitt, vorzugsweise eine Vielzahl derselben, als Faltenbalg (33; 38; 88,92, 96,106) ausgebildet ist.

24.     Rohr nach Anspruch 23, dadurch gekennzeichnet, daß bei Vorhandensein mehrerer Faltenbälge (33) deren Abstand groß gegenüber der Längenerstreckung der benachbarten Faltenbälge ist, und daß bei Anordnung von einem oder mehr Faltenbälgen diese als sickenartige Versteifung (33) der Rohrwandung jeweils mit Anordnung nur weniger Falten (32) ausgebildet sind.

25.     Rohr nach einem der Ansprüche 22 bis 24, dadurch gekennzeichnet, daß mindestens einige von nicht am Ende des Rohres (2; 42; 86) gelegenen biegesteifen Rohrabschnitten (22; 90;94) und/oder das verformbare Ende (4;86) des Rohres (2; 34; 82) innen und/oder außen glatt ausgebildet sind.

26.     Rohr nach einem der Ansprüche 23 bis 25, dadurch gekennzeichnet, daß an demselben Rohr (34) mindestens ein sickenartiger Faltenbalg (30) und mindestens ein vielfaltiger Umlenkbalg (38) ausgebildet sind.

27.    Rohr nach einem der Ansprüche 17 bis 26, dadurch gekennzeichnet, daß mindestens ein in einen unterschiedlichen Anschlußquerschnitt verformbares Ende (24; 86) des Kunststoffrohres (2; 34;82) biegesteif ausgebildet ist.

28.    Rohr nach Anspruch 26 oder 27, dadurch gekennzeichnet, daß um die Außenfläche des verformbaren biegesteifen Endes (24; 86) Rastnasen (26) in Gestalt von Ausbeulungen der Rohrwandung zum Eingriff in Rastausnehmungen (50;50a) eines Rohrverbinders, z.B. umgreifende Schelle oder Muffe (86), ausgeformt sind.

29.    Rohr nach einem der Ansprüche 16 bis 28, gekennzeichnet durch einen abgeflacht gerundeten, vorzugsweise ovalen, Rohrquerschnitt mindestens des in den Anschlußquerschnitt verformbaren Rohrendes (24; 86) sowie eine solche Ausbildung von dessen Wandung nach Material und Gestalt, daß der vorgefertigte Rohrquerschnitt in einen runden und/oder rechteckigen Querschnitt verformbar ist.

30.    Rohr nach einem der Ansprüche 16 bis 29, dadurch gekennzeichnet, daß mindestens die Wandstärke des verformbaren Endes (24; 86) des Kunststoffrohres (2; 34; 82) höchstens etwa 1,5 mm beträgt.

31. Rohr nach einem der Ansprüche 16 bis 30, dadurch gekennzeichnet, daß das Rohr aus einem nichtbrennbaren Baustoff gemäß Baustoffklasse A1 nach DIN 4102, z.B. Al oder einer Al-Legierung, besteht.

32. Rohr nach einem der Ansprüche 16 bis 31, dadurch gekennzeichnet, daß das Rohr (2; 34; 82) aus durch Zusätze schwer entflammbar ausgebildetem Polypropylen besteht.

33. Rohr nach einem der Ansprüche 16 bis 32, dadurch gekennzeichnet, daß ein Ende des Rohres (82) als steifer Tragrahmen (122) eines Luftführungseinsatzes (134) ausgebildet ist.

34. Rohr nach Anspruch 33, dadurch gekennzeichnet, daß der Tragrahmen (122) mit einem querschnittsverändernden Übergangsstück (110) aus dem übrigen Rohr (82) hervorgeht.

35. Rohr nach den Ansprüchen 33 und 34, dadurch gekennzeichnet, daß der Tragrahmen (122) als eingestülptes Hohlprofil (112-126) ausgebildet ist.

36. Rohr nach einem der Ansprüche 33 bis 35, dadurch gekennzeichnet, daß der Tragrahmen (122) an der dem übrigen Rohr (82) zugewandten Seite eine Anschlagschulter (112) bildet.

37. Rohr nach einem der Ansprüche 33 bis 36, dadurch gekennzeichnet, daß der Luftführungseinsatz von eine Klappjalousie (134) bildenden Lamellen (158) gebildet ist, die mit Achsstummeln (164) in Bohrungen oder andere Lagerstellen (150) des

Tragrahmens (122) eingesetzt sind.

38.     Rohr nach Anspruch 37, dadurch gekennzeichnet, daß an dem Tragrahmen (122), dem Lamellenblatt (158) und/oder der Lagerstelle (150) für das Lamellenblatt Öffnungsbegrenzungsanschläge (170; 174; 172; 176, 178; 182, 184) ausgebildet sind.

39.     Rohr nach einem der Ansprüche 33 bis 38, dadurch gekennzeichnet, daß innerhalb einer Einbaustrecke des Rohres zwischen der Rückseite (112) des Tragrahmens (122) und einem weiter zum anderen Ende (86) des Rohres (82) gelegenen Querschnitt um die Außenseite des Rohres verteilte Greifnasen (110) in der Wandung des Kunststoffrohres ausgeformt sind.

40.     Rohr nach Anspruch 39, dadurch gekennzeichnet, daß die Greifnasen (110) pyramidenförmig ausgebildet sind, daß die Pyramide eine dem Tragrahmen (122) zugewandte Seite (1o4) aufweist, die zur Pyramidenspitze hin widerhakenartig konkav gekrümmt ist, und daß die dem Tragrahmen (122) abgewandte Seite (102) der Pyramide als Gleitfläche ausgebildet ist.

41.     Rohr nach Anspruch 39 oder 40, dadurch gekennzeichnet, daß das Rohr (82) zwischen dem Tragrahmen (122) und den Greifnasen (100), gegebenenfalls zusätzlich auch noch innerhalb der Einbaustrecke an der dem Tragrahmen abgewandten Seite der Greifnasen, als axial wirksames Federelement (1o6; gegebenenfalls 96) ausgebildet ist.

42. Rohr nach einem der Ansprüche 33 bis 41, dadurch gekennzeichnet, daß das Rohr (82) zwischen der Einbaustrecke und seinem dem Tragrahmen (122) fernen Ende (86) über mindestens einen Längenbereich biegsam, vorzugsweise als Faltenbalg (88,92, 96), ausgebildet ist.

43. Rohr nach Anspruch 42, dadurch gekennzeichnet, daß mindestens ein Faltenbalg (92) ein 90°-Umlenkbalg ist.

44. Rohr nach Anspruch 42 oder 43, dadurch gekennzeichnet, daß mindestens zwei Faltenbälge (88,92,96) unterschiedlicher Faltenzahl vorgesehen sind.

45. Rohr nach einem der Ansprüche 16 bis 44, welches in ein Anschlußteil ein- oder auf ein Anschlußteil aufgesteckt ist, dadurch gekennzeichnet, daß das die Steckverbindung bildende Ende (an 48) des Anschlußteils (18) formsteif ausgebildet ist.

46. Rohr nach Anspruch 45, dadurch gekennzeichnet, daß das Anschlußteil (18) ein auf das Rohr (2;34;82) aufschiebbarer Rohrverbinder, vorzugsweise eine Muffe (3) ist.

47. Rohr nach Anspruch 45 oder 46, dadurch gekennzeichnet, daß an dem die Steckverbindung (an 48) bildenden Ende des Anschlußteils (18) ein formsteifes Halteelement (54) ausgebildet ist, das gemeinsam mit der Wand (46) des Anschlußteils (18) einen Haltespalt (62) für das Ende (24;86) des Kunststoffrohres (2;34;8 in der Steckverbindungsstellung bildet.

BAD ORIGINAL

Fig. 1

Fig. 1a

-10-  -10-

-8-

-1/16-

0002197

Fig.2

0002197

d1

30

26  28b

28a

d2

IV

IV

26

Fig. 3

Fig. 4

26

0002197

*Fig. 5*

*Fig. 5a*

*Fig. 5b*

Fig. 7

Fig. 6

Fig. 8

Fig. 9

Fig. 11a

Fig. 10

A2

82

B2    32    92    90    32    88    86    26

**Fig. 11 b**

**Fig. 12**

100

32

82

104

104

0002197

Fig. 13

Fig. 14

Fig. 15

Fig. 16 a

Fig. 16 b

Fig. 16 c

Fig. 16 d

Fig. 16 e

Fig. 16 f

$^{11}/_{16}$

Fig. 17

r1 r2 r3

124

110

118

148 144

Fig. 17a

162    152    158
164    168    160    158    164

164    160    162    158    164
168    152    158    *Fig. 18*

162    152    158
164    160    158    164

164    160    158    164
162    152    158    *Fig. 19*

26    86
156

26

154    *Fig. 17 b*

Fig. 21

Fig. 20

Fig. 22

Fig. 23

Fig. 24

Fig. 24 a

118

124

150

150

150

*Fig. 25*

120

186

184

180

182

*Fig. 26a*

174

124

126

150

186

182

XXVI

150

186

182

150

120

122

*Fig. 26*